(19) **Europäisches Patentamt European Patent Office Office européen des brevets**

(11) **EP 4 611 460 A1**

(12) **EUROPEAN PATENT APPLICATION**
published in accordance with Art. 153(4) EPC

(43) Date of publication:
**03.09.2025 Bulletin 2025/36**

(21) Application number: **23886090.2**

(22) Date of filing: **19.10.2023**

(51) International Patent Classification (IPC):
$H04W\ 72/12^{(2023.01)}$    $H04W\ 72/23^{(2023.01)}$
$H04W\ 72/04^{(2023.01)}$    $H04L\ 5/00^{(2006.01)}$

(52) Cooperative Patent Classification (CPC):
**H04L 5/00; H04W 72/04; H04W 72/12; H04W 72/23**

(86) International application number:
**PCT/KR2023/016277**

(87) International publication number:
**WO 2024/096393 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:   **03.11.2022   KR 20220145566**

(71) Applicant: **Samsung Electronics Co., Ltd.**
**Suwon-si, Gyeonggi-do 16677 (KR)**

(72) Inventors:
• **SHIM, Jaeyeon**
  **Suwon-si, Gyeonggi-do 16677 (KR)**
• **CHOI, Kyungjun**
  **Suwon-si, Gyeonggi-do 16677 (KR)**
• **JI, Hyoungju**
  **Suwon-si, Gyeonggi-do 16677 (KR)**
• **CHOE, Hyemin**
  **Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD AND APPARATUS FOR TRANSMITTING UPLINK DATA CHANNEL IN WIRELESS COMMUNICATION SYSTEM**

(57)     The disclosure relates to a method and apparatus for transmitting or receiving an uplink data channel in a wireless communication system, and more particularly to an apparatus and method including identifying a time division duplex (TDD) uplink (UL)-downlink (DL) configuration including at least one of a DL slot or a UL slot, and a UL subband in the DL slot; identifying first frequency index information and second frequency index information for frequency hopping in the UL subband in the DL slot; and based on the first frequency index information and the second frequency index information, performing frequency hopping for the PUSCH in the UL subband in the DL slot. According to the disclosure, the UL data channel may be effectively transmitted or received.

FIG. 1

**Description**

**Technical Field**

The disclosure relates to operations of a user equipment (UE) and a base station (BS) in a wireless communication system. More particularly, the disclosure relates to a method and apparatus for transmitting and receiving a data channel of the UE that supports full-duplex communication.

**Background Art**

Fifth generation (5G) mobile communication technologies define wide frequency bands to allow for high transmission rates and new services, and may also be implemented not only in a sub-6 Gigahertz (GHz) band, e.g., 3.5 GHz, but also in an ultrahigh frequency band (above 6 GHz) called millimeter waves (mmWave) such as 28 GHz and 39 GHz. Moreover, for sixth generation (6G) mobile communication technologies called a beyond 5G system, it is considered to be implemented in Terahertz (THz) bands (e.g., bands from 95 GHz to 3 THz) to attain transmission rates 50 times higher than and ultra-low delay reduced to a tenth of the 5G mobile communication technology.

In an early stage of the 5G mobile communication technology, beamforming and massive multiple input multiple output (MIMO) to mitigate a radio path loss and increase the radio propagation distance in the ultra-high frequency band, support for various numerologies (operation of multiple subcarrier spacing) and dynamic slot format operation for efficient use of ultra-high frequency resources, initial access technologies for supporting multiple-beam transmission and widebands, definition and operation of bandwidth parts (BWPs), new channel coding schemes such as polar codes for highly reliable transmission of control information and low density parity check (LDPC) codes for high-volume data transmission, L2 preprocessing, network slicing for providing a dedicated network specialized for a particular service, etc., were standardized to support services and satisfy performance requirements for enhanced mobile broadband (eMBB), ultra-reliable low-latency communications (URLLC), and massive machine-type communications (mMTC).

Improvement and performance enhancement of the early 5G mobile communication technology are currently being discussed with consideration for the services that the 5G mobile communication technology has intended to support, and physical layer standardization for technologies such as vehicle-to-everything (V2X) to help driving decisions of autonomous vehicles and increase user convenience based on locations and status information of the vehicles transmitted by the vehicles, new radio unlicensed (NR-U) to aim at system operations conforming to various regulatory requirements in an unlicensed band, an NR terminal low-power consumption technology (UE power saving), non-terrestrial network (NTN), which is a direct terminal-satellite communication for securing coverage in a region where communication with a terrestrial network is unavailable, positioning, etc., is on going.

In addition, standardization of wireless interface architecture/protocol areas for technologies such as industrial Internet of things (IIoT) for supporting new services through connection and convergence with other industries, integrated access and backhaul (IAB) that provides a node to integrally support the wireless backhaul link and the access link to extend the network service area, mobility enhancement including conditional handover and dual active protocol stack (DAPS) handover, 2-step random access channel (RACH) for new radio (NR) to simplify the random access procedure, etc., and standardization of system architectures/service areas such as 5G baseline architectures (e.g., service based architectures or service based interfaces) for combination of network functions virtualization (NFV) and software-defined networking (SDN), mobile edge computing (MEC) to receive services based on a location of the terminal, etc., is also underway.

When such 5G mobile communication systems are commercialized, explosively increasing connected devices may be connected to the communication network, so that it is expected that enhancement of functions and performance of the 5G mobile communication system and integrated operation of the connected devices are required. For this, new research will be on the way for 5G performance enhancement and complexity reduction, artificial intelligence (AI) service support, metaverse service support, drone communication, etc., using AI, machine learning (ML) and extended reality (XR) to efficiently support augmented reality (AR), virtual reality (VR), mixed reality (MR), etc.

Advancement of the 5G mobile communication system may also be fundamental to developing not only a multiple antenna transmission technology such as large-scale antennas, array antennas, full dimensional multi-input multi-output (FD-MIMO) and new waveforms for guaranteeing coverage in THz bands of the 6G mobile communication technology, a high-dimensional spatial multiplexing technology using orbital angular momentum (OAM) and metamaterial based lens and antennas to enhance coverage of THz band signals, and a reconfigurable intelligent surface (RIS) technology, but also a full-duplex technology for frequency efficiency improvement and system network enhancement of the 6G mobile communication technology, an AI based communication technology to materialize system optimization by using a satellite and AI from a design stage and internalizing an end-to-end AI support function, a next generation distributed computing technology to materialize sophisticated services beyond the limit of terminal computation capacity by using ultra-high performance communication and computing resources, etc.

## Disclosure of Invention

### Technical Problem

Based on the foregoing discussion, the disclosure provides an apparatus and method of effectively providing a service in a mobile communication system.

### Solution to Problem

According to a first aspect of the disclosure, a method by which a terminal transmits a physical uplink shared channel (PUSCH) in a wireless communication system may include identifying a time division duplex (TDD) uplink (UL)-downlink (DL) configuration including at least one of a DL slot or a UL slot, and a UL subband in the DL slot; identifying first frequency index information and second frequency index information for frequency hopping in the UL subband in the DL slot; and based on the first frequency index information and the second frequency index information, performing frequency hopping for the PUSCH in the UL subband in the DL slot.

According to a second aspect of the disclosure, a terminal configured to transmit a PUSCH in a wireless communication system includes a transceiver; and a processor connected to the transceiver, wherein the processor may be configured to identify a TDD UL-DL configuration including at least one of a DL slot or a UL slot, and a UL subband in the DL slot, identify first frequency index information and second frequency index information for frequency hopping in the UL subband in the DL slot, and based on the first frequency index information and the second frequency index information, perform frequency hopping for the PUSCH in the UL subband in the DL slot.

Preferably, the identifying of the first frequency index information and the second frequency index information may include identifying the first frequency index information based on first start resource block (RB) index information, and identifying the second frequency index information based on the first start RB index information and second RB offset information, wherein the first start RB index information and the second RB offset information may be indicated by DCI scheduling the PUSCH.

Preferably, the method may further include identifying third frequency index information and fourth frequency index information for frequency hopping in the UL slot based on the first frequency index information and the second frequency index information; and based on the third frequency index information and the fourth frequency index information, performing frequency hopping for the PUSCH in the UL slot.

Preferably, the method may further include receiving, from a base station, a second RB offset information indicating an offset for frequency hopping between the UL subband in the DL slot and the UL slot, wherein the identifying of the third frequency index information and the fourth frequency index information may include identifying the third frequency index information based on the first frequency index information and the second RB offset information, and identifying the fourth frequency index information based on the second frequency index information and the second RB offset information.

Preferably, the method may further include receiving, from the base station, the second RB offset information and third RB offset information indicating offsets for frequency hopping between the UL subband in the DL slot and the UL slot, wherein the identifying of the third frequency index information and the fourth frequency index information may include identifying the third frequency index information based on the first frequency index information and the second RB offset information, and identifying the fourth frequency index information based on the second frequency index information and the third RB offset information.

Preferably, the identifying of the first frequency index information and the second frequency index information may include identifying third frequency index information and fourth frequency index information for frequency hopping in the UL slot, identifying second RB offset information and third RB offset information indicating offsets between the UL subband in the DL slot and the UL slot, identifying the first frequency index information based on the third frequency index information and the second RB offset information, and identifying the second frequency index information based on the fourth frequency index information and the third RB offset information.

Preferably, the first frequency index information may indicate a start RB index of a first frequency hop in the UL subband in the DL slot, the second frequency index information may indicate a start RB index of a second frequency hop in the UL subband in the DL slot, the third frequency index information may indicate a start RB index of a first frequency hop in the UL slot, and the fourth frequency index information may indicate a start RB index of a second frequency hop in the UL slot.

According to a third aspect of the disclosure, a method by which a base station receives a physical uplink shared channel (PUSCH) in a wireless communication system is provided, and the method may include configuring a terminal with a TDD UL-DL configuration including at least one of a DL slot or a UL slot, and a UL subband in the DL slot; identifying first frequency index information and second frequency index information for frequency hopping in the UL subband in the DL slot; and based on the first frequency index information and the second frequency index information, receiving the PUSCH from the terminal based on frequency hopping in the UL subband in the DL slot.

According to a fourth aspect of the disclosure, a base station configured to receive a PUSCH in a wireless communication system is provided, and the base station may include a transceiver; and a processor connected to the transceiver, wherein the processor may be configured to configure a terminal with a TDD UL-DL configuration including at least one of a DL slot or a UL slot, and a UL subband in the DL slot, identify first frequency index information and second frequency index information for frequency hopping in the UL subband in the DL slot, and based on the first frequency index information and the second frequency index information, receive the PUSCH from the terminal based on frequency hopping in the UL subband in the DL slot.

## Advantageous Effects of Invention

According to embodiments of the disclosure, an apparatus and method may effectively provide services in a mobile communication system.

## Brief Description of Drawings

FIG. 1 illustrates a basic structure of a time-frequency domain in a wireless communication system, according to an embodiment of the disclosure.

FIG. 2 illustrates a frame, subframe, and slot structure in a wireless communication system, according to an embodiment of the disclosure.

FIG. 3 illustrates an example of configuration of bandwidth parts (BWPs) in a wireless communication system, according to an embodiment of the disclosure.

FIG. 4 illustrates an example of configuration of control resource sets of a downlink (DL) control channel in a wireless communication system, according to an embodiment of the disclosure.

FIG. 5 illustrates a structure of a DL control channel in a wireless communication system, according to an embodiment of the disclosure.

FIG. 6 is a diagram for describing how a base station (BS) and a user equipment (UE) transmit or receive data by considering a DL data channel and a rate matching resource in a wireless communication system, according to an embodiment of the disclosure.

FIG. 7 illustrates an example of frequency domain resource allocation of a physical downlink shared channel (PDSCH) in a wireless communication system, according to an embodiment of the disclosure.

FIG. 8 illustrates an example of time domain resource allocation of a PDSCH in a wireless communication system, according to an embodiment of the disclosure.

FIG. 9 illustrates an example of time domain resource allocation based on subcarrier spacing (SCS) on a data channel and a control channel in a wireless communication system, according to an embodiment of the disclosure.

FIG. 10 illustrates an example of physical uplink shared channel (PUSCH) repetition type B, according to an embodiment of the disclosure.

FIG. 11 illustrates an example of PUSCH frequency hopping, according to an embodiment of the disclosure.

FIG. 12 is a diagram for describing subband full duplex (SBFD) resource configuration information of the disclosure.

FIG. 13 illustrates an SBFD configuration, according to an embodiment.

FIG. 14 illustrates a method of configuring PUSCH transmission positions across SBFD symbols and UL dedicated symbols, according to an embodiment.

FIG. 15 illustrates a method of configuring PUSCH transmission with respect to a UL subband according to an embodiment.

FIG. 16 illustrates a method of configuring PUSCH transmission with respect to a UL BWP, according to an embodiment.

FIG. 17 illustrates a method of determining PUSCH transmission positions on a UL subband configuration basis, according to an embodiment.

FIG. 18 illustrates a method of determining PUSCH transmission positions on a UL subband configuration basis, according to an embodiment.

FIG. 19 illustrates a method of determining PUSCH transmission positions without frequency hopping on a UL subband configuration basis, according to an embodiment.

FIG. 20 is a diagram illustrating an operation of a UE, according to an embodiment of the disclosure.

FIG. 21 is a diagram illustrating an operation of a UE, according to an embodiment of the disclosure.

FIG. 22 is a block diagram of a UE in a wireless communication system, according to an embodiment of the disclosure.

FIG. 23 is a block diagram of a BS in a wireless communication system, according to an embodiment of the disclosure.

**Mode for the Invention**

Embodiments of the disclosure will be described in detail with reference to accompanying drawings.

Technological content well-known in the art or not directly related to the disclosure is omitted in the following description. Through the omission of the content that might otherwise obscure the subject matter of the disclosure, the subject matter will be understood more clearly.

For the same reason, some parts in the accompanying drawings are exaggerated, omitted or schematically illustrated. The size of the respective elements may not fully reflect their actual size. In the drawings, the same or corresponding components are given the same reference numerals.

Advantages and features of the disclosure, and methods for achieving them will be understood more clearly when the following embodiments are read with reference to the accompanying drawings. The embodiments of the disclosure may, however, be embodied in many different forms and should not be construed as limited to the embodiments set forth herein; rather, these embodiments of the disclosure are provided so that this disclosure will be thorough and complete, and will fully convey the scope of the embodiments of the disclosure to those of ordinary skill in the art. Like numbers refer to like elements throughout the specification. In the description of the disclosure, when it is determined that a detailed description of related functions or configurations may unnecessarily obscure the subject matter of the disclosure, the detailed description will be omitted. Further, the terms, as will be mentioned later, are defined by taking functionalities in the disclosure into account, but may vary depending on practices or intentions of users or operators. Accordingly, the terms should be defined based on descriptions throughout this specification.

In the following description, a base station is an entity for performing resource allocation for a terminal, and may be at least one of a gNB, an eNB, a Node B, a base station (BS), a radio access unit, a base station controller, or a node on a network. The terminal may include a user equipment (UE), a mobile station (MS), a cellular phone, a smart phone, a computer, or a multimedia system capable of performing a communication function. In the disclosure, downlink (DL) refers to a radio transmission path for a signal transmitted from a BS to a UE, and uplink (UL) refers to a radio transmission path for a signal transmitted from a UE to a BS. Although the following embodiments will focus on the long term evolution (LTE) or LTE-Advanced (LTE-A) system as an example, they may be applied to other communication systems with similar technical backgrounds or channel types. For example, the 5th generation (5G) mobile communication technologies developed since the long term evolution (LTE) advanced (LTE-A), such as the 5G new radio (NR) may be included in the systems to which the embodiments of the disclosure will be applied, and the term '5G' as herein used may be a concept including the existing LTE, LTE-A, or other similar services. Furthermore, embodiments of the disclosure will also be applied to different communication systems with some modifications to such an extent that does not significantly deviate the scope of the disclosure when judged by skilled people in the art.

It will be understood that each block and combination of the blocks of a flowchart may be performed by computer program instructions. The computer program instructions may be loaded onto a processor of a universal computer, a special-purpose computer, or other programmable data processing equipment, and thus they generate means for performing functions described in the block(s) of the flowcharts when executed by the processor of the computer or other programmable data processing equipment. The computer program instructions may also be stored in computer-executable or computer-readable memory that may direct the computers or other programmable data processing apparatus to function in a particular manner, such that the instructions stored in the computer-executable or computer-readable memory may produce an article of manufacture including instruction means that perform the functions specified in the flowchart blocks(s). The computer program instructions may also be loaded onto the computer or other programmable data processing apparatus to cause a series of operational steps to be performed on the computer or other programmable apparatus to produce a computer implemented process such that the instructions that are executed on the computer or other programmable apparatus provide operations for implementing the functions specified in the flowchart block(s).

Furthermore, each block may represent a part of a module, segment, or code including one or more executable instructions to perform particular logic function(s). It is noted that the functions described in the blocks may occur out of order in some alternative embodiments. For example, two successive blocks may be performed substantially at the same time or in reverse order depending on the corresponding functions.

The term "module" (or sometimes "unit") as used herein refers to a software or hardware component, such as field programmable gate array (FPGA) or application specific integrated circuit (ASIC), which performs some functions. However, the module is not limited to software or hardware. The module may be configured to be stored in an addressable storage medium, or to execute one or more processors. For example, the modules may include components, such as software components, object-oriented software components, class components and task components, processes, functions, attributes, procedures, subroutines, segments of program codes, drivers, firmware, microcodes, circuits, data, databases, data structures, tables, arrays, and variables. Functions served by components and modules may be combined into a small number of components and modules, or further divided into a larger number of components and modules. Moreover, the components and modules may be implemented to execute one or more central processing units (CPUs) in a device or security multimedia card. In embodiments, the module may include one or more processors.

Wireless communication systems are evolving from early systems that provide voice-oriented services to broadband wireless communication systems that provide high data rate and high quality packet data services such as third generation partnership project (3GPP) high speed packet access (HSPA), long term evolution (LTE) or evolved universal terrestrial radio access (E-UTRA), LTE-advanced (LTE-A), LTE-Pro, 3GPP2 high rate packet data (HRPD), ultra mobile broadband (UMB), and IEEE 802.16e communication standards.

As a representative example of such a broadband wireless communication system, an LTE system adopts orthogonal frequency division multiplexing (OFDM) for downlink (DL) and single carrier frequency division multiple access (SC-FDMA) for uplink (UL). The UL refers to a radio link for a user equipment (UE) or a mobile station (MS) to transmit data or a control signal to an eNode B or a base station (BS), and the DL refers to a radio link for a BS to transmit data or a control signal to a UE or MS. Such a multiple access scheme allocates and operates time-frequency resources for carrying data or control information for respective users not to overlap each other, i.e., to maintain orthogonality, thereby differentiating each user's data or control information.

As a future communication system after the LTE, the 5G communication system needs to freely reflect various demands from users and service providers and thus support services that simultaneously meet the various demands. The services considered for the 5G communication system may include enhanced Mobile Broadband (eMBB), massive Machine Type Communication (mMTC), Ultra Reliability Low Latency Communication (URLLC), etc.

The eMBB is aimed at providing more enhanced data rates than the LTE, LTE-A or LTE-Pro may support. For example, in the 5G communication system, the eMBB is required to provide 20 Gbps peak data rate in DL and 10 Gbps peak data rate in UL in terms of a single BS. Furthermore, the 5G communication system needs to provide increasing user perceived data rate while providing the peak data rate. To satisfy these requirements, various technologies for transmission or reception including multiple-input multiple-output (MIMO) transmission technologies are required to be more enhanced. While the LTE uses up to 20 MHz transmission bandwidth in the 2 GHz band for signal transmission, the 5G communication system may use frequency bandwidth wider than 20 MHz in the 3 to 6 GHz band or in the 6 GHz or higher band, thereby satisfying the data rate required by the 5G communication system.

At the same time, in the 5G communication system, mMTC is considered to support an application service such as an Internet of Things (IoT) application service. In order for the mMTC to provide the IoT efficiently, support for access from massive number of terminals in a cell, enhanced coverage of the terminal, extended battery time, reduction in terminal price, etc., are required. Because the IoT is equipped in various sensors and devices to provide communication functions, it may be supposed to support a large number of UEs in a cell (e.g., 1,000,000 terminals/km$^2$). Furthermore, a terminal supporting the mMTC is more likely to be located in a shadow area, such as underground of a building, which might not be covered by a cell by the nature of the service, so the mMTC may require an even larger coverage than expected for other services provided by the 5G communication system. The UE supporting the mMTC needs to be a low-cost terminal, and may require quite a long battery life time such as 10 to 15 years because it is difficult to frequently change the battery of the UE.

Finally, URLLC is a mission critical cellular-based wireless communication service. For example, the URLLC may provide services used for remote control over robots or machinery, industrial automation, unmanned aerial vehicle, remote health care, emergency alert, etc. Accordingly, communication offered by the URLLC requires very low latency and very high reliability. For example, URLLC services need to satisfy sub-millisecond (less than 0.5 millisecond) air interface latency and simultaneously require a packet error rate of $10^{-5}$ or less. Hence, for the URLLC services, the 5G system needs to provide a smaller transmission time interval (TTI) than for other services, and simultaneously requires a design that allocates a wide range of resources for a frequency band to secure reliability of the communication link.

Those three services in 5G, eMBB, URLLC, and mMTC may be multiplexed in a single system for transmission. In this case, to meet different requirements for the three services, different transmission or reception schemes and parameters may be used between the services. 5G, however, is not limited to the three services.

[NR time-frequency resource]

A frame structure in a 5G system will now be described in more detail with reference to the accompanying drawings.

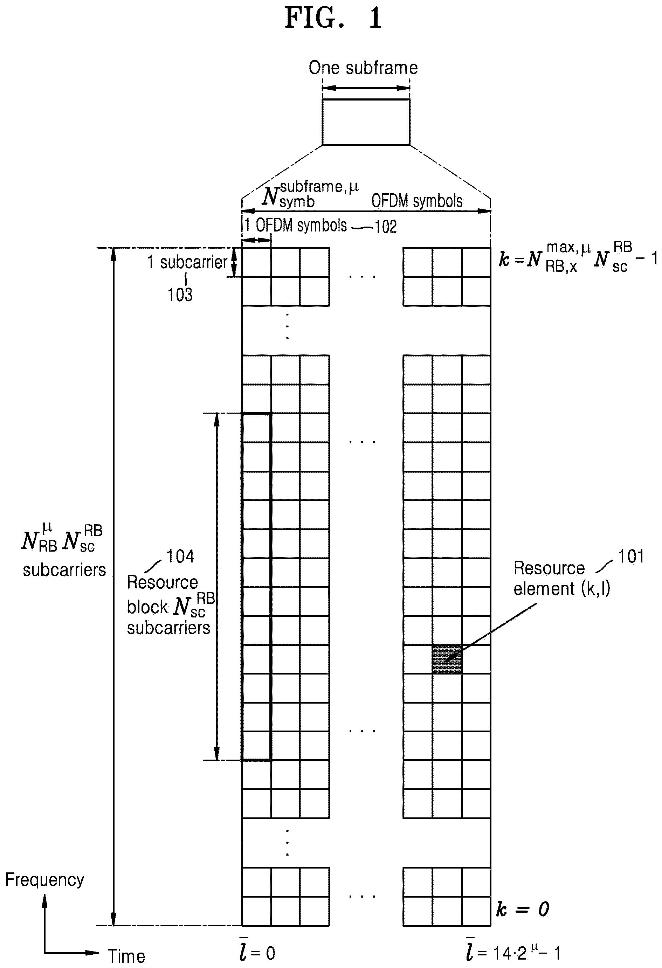

FIG. 1 illustrates a basic structure of a time-frequency domain, which is a radio resource domain in which data or a control channel is transmitted in a fifth generation (5G) system.

In FIG. 1, the horizontal axis represents the time domain, and the vertical axis represents the frequency domain. A basic resource unit in the time and frequency domain is a resource element (RE) 101, which may be defined as an orthogonal frequency division multiplexing (OFDM) **symbol 102** on the time axis and a subcarrier 103 on the frequency axis. In the frequency domain, $N_{SC}^{RB}$ (e.g., 12) successive REs may constitute a single resource block (RB) 104.

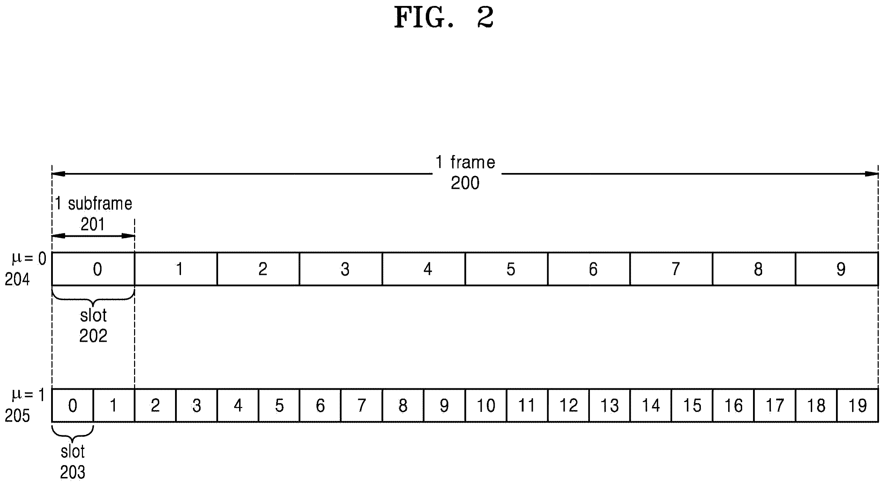

FIG. 2 illustrates a frame, subframe, and slot structure in a wireless communication system, according to an embodiment of the disclosure.

In FIG. 2, shown is an example of a structures of a frame 200, a subframe 201 and a slot 202. The one frame 200 may be defined to be 10 ms long. The one subframe 201 may be defined to be 1 ms, and thus, a total of 10 subframes 201 may constitute the one frame 200. The one slot 202 or 203 may be defined to have 14 OFDM symbols (i.e., the number of symbols per 1 slot ( $N_{symb}^{slot}$ ) = 14 ). The one subframe 201 may include one or more slots 202 or 203, and the number of slots 202 and 203 per 1 subframe may vary depending on subcarrier spacing configuration values $\mu$ (204 and 205). In the example of FIG. 2, as the subcarrier spacing configuration values, $\mu=0$ (204) and $\mu=1$ (205) are shown. $\mu$In the case of $\mu=0$ (204), the one subframe 201 may include one slot 202, and in the case of $\mu=1$ (205), one subframe 201 may include two slots 203. That is, depending on the subcarrier spacing configuration value $\mu$, the number of slots per 1 subframe ( $N_{slot}^{subframe,\mu}$ ), may vary, and the number of slots per 1 frame ( $N_{slot}^{frame,\mu}$ ) may vary accordingly. $N_{slot}^{subframe,\mu}$ and $N_{slot}^{frame,\mu}$ depending on the subcarrier spacing configuration value $\mu$ may be defined as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

How to configure bandwidth parts (BWPs) in the 5G communication system will now be described in detail with reference to related drawings.

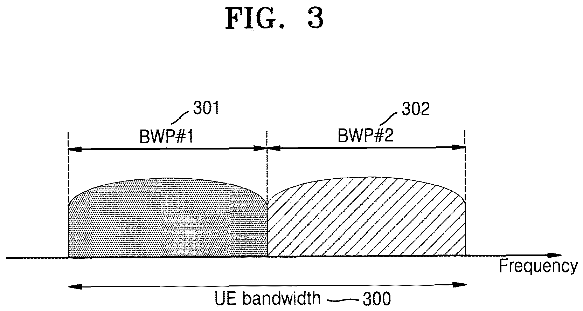

FIG. 3 illustrates an example of configuration of BWPs in a wireless communication system, according to an embodiment of the disclosure

In an example of FIG. 3, UE bandwidth 300 is configured into two BWPs, BWP#1 301 and BWP#2 302. The BS may configure the UE with one or more BWPs, and configure information of Table 2 below for each BWP.

[Table 2]

```
BWP ::=                      SEQUENCE {
        bwp-Id               BWP-Id,
        ( Identity of BWP )
        locationAndBandwidth  INTEGER (1..65536),
        ( Location of BWP )
        subcarrierSpacing     ENUMERATED {n0, n1, n2, n3, n4, n5},
        ( Subcarrier Spacing )
        cyclicPrefix          ENUMERATED { extended }
        ( Cyclic prefix )
}
```

It is not limited thereto, and apart from the configuration information, various parameters related to the BWP may also be configured for the UE. The information may be transmitted by the BS to the UE through higher layer signaling, e.g., radio resource control (RRC) signaling. At least one of the configured one or more BWPs may be activated. Whether to activate a configured BWP may be notified from the BS to the UE semi-statically by RRC signaling or dynamically in DL control information (DCI).

In an embodiment, the UE may be configured by the BS with an initial BWP for initial access in a Master Information Block (MIB) before the UE is RRC connected. Specifically, the UE may receive configuration information for a control resource set (or CORESET) and search space in which a physical downlink control channel (PDCCH) may be transmitted for receiving system information (corresponding to remaining system information (RMSI) or system information block 1 (SIB1)) required for initial access through the MIB in an initial access process. The control resource set and search space configured in the MIB may each be regarded with identity (ID) 0. The BS may notify the UE of configuration information, such as frequency allocation information, time allocation information, numerology, etc., for control resource set #0, in the MIB. The BS may also notify the UE of configuration information for a monitoring periodicity and occasion for the control resource set #0, i.e., configuration information for search space #0 in the MIB. The UE may regard a frequency area set to the control resource set #0 obtained from the MIB as the initial BWP for initial access. In this case, the ID of the initial BWP may be regarded as 0.

Such configuration of the BWP supported by the 5G may be used for various purposes.

In an embodiment, an occasion when the bandwidth supported by the UE is smaller than the system bandwidth may be addressed by the BWP configuration. For example, the BS may configure the UE with frequency location of the BWP (configuration information 2), thereby allowing the UE to transmit or receive data in the particular frequency location in the system bandwidth.

Furthermore, in an embodiment, for the purpose of supporting different numerologies, the BS may configure a plurality of BWPs for the UE. For example, to support data transmission and reception using both 15 KHz subcarrier spacing and 30 KHz subcarrier spacing for a UE, two BWPs may be configured with 15 KHz and 30 KHz subcarrier spacing, respectively. The different BWPs may be frequency division multiplexed, and for data transmission and reception with particular subcarrier spacing, a BWP configured with the subcarrier spacing may be activated.

Moreover, in an embodiment, for the purpose of reducing power consumption of the UE, the BS may configure BWPs with different bandwidth sizes for the UE. For example, when a UE supports very large bandwidth, e.g., 100 MHz bandwidth, and always transmits or receives data in the bandwidth, the UE may consume very large power. In a particular situation where there is no traffic, monitoring unnecessary DL control channels in the large 100 MHz bandwidth may be very inefficient in terms of power consumption. To reduce the power consumption of the UE, the BS may configure a BWP with relatively small bandwidth, e.g., a 20 MHz BWP, for the UE. In the situation that there is no traffic, the UE may perform monitoring in the 20 MHz BWP, and when data occurs, the UE may transmit or receive the data in the 100 MHz BWP under instructions from the BS.

In the method of configuring a BWP, UEs may receive configuration information for the initial BWP in the MIB in an initial access process before being RRC connected. Specifically, the UE may be configured with a control resource set (CORESET) for a DL control channel on which downlink control information (DCI) may be transmitted to schedule a system information block (SIB) in the MIB of a physical broadcast channel (PBCH). Bandwidth of the control resource set configured in the MIB may be regarded as the initial BWP, and the UE may receive a physical downlink shared channel (PDSCH) on which the SIB is transmitted in the initial BWP. The initial BWP may also be used for other system information (OSI), paging, or random access apart from reception of the SIB.

[Bandwidth part (BWP) switching]

When one or more BWPs are configured for the UE, the BS may indicate switching or transition of BWP by using a BWP indicator field in DCI to the UE. For example, when a BWP of the UE currently activated is BWP#1 301 in FIG. 3, the BS may indicate BWP#2 302 with a bandwidth indicator in DCI to the UE, and the UE may perform BWP switching to the BWP#2 302 indicated with the BWP indicator in the received DCI.

As the DCI based BWP switching may be indicated by DCI that schedules a PDSCH or physical uplink shared channel (PUSCH) as described above, the UE may be able to transmit or receive the PDSCH or the PUSCH scheduled by the DCI in the switched BWP without difficulty when receiving the BWP switching request. For this, a standard defines a requirement for a delay time $T_{BWP}$ required for BWP switching, which may be defined, for example, as in Table 3 below:

[Table 3]

| $\mu$ | NR Slot length (ms) | BWP switch delay $T_{BWP}$ (slots) | |
| --- | --- | --- | --- |
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the larger one between the SCS before BWP switch and the SCS after BWP switch. | | | |

The requirement for BWP switching delay time supports type 1 or type 2 depending on a capability of the UE. The UE may report a supportable BWP delay time type to the BS.

According to the requirement for the BWP switching delay time, the UE may complete switching to a new BWP indicated by the BWP switching indicator no later than slot n+$T_{BWP}$ when receiving DCI including the BWP switching indicator in slot n, and transmit or receive a data channel scheduled by the DCI in the new BWP. The BS may determine to allocate a time domain resource for the data channel by considering the BWP switching delay time $T_{BWP}$ of the UE in order to schedule the data channel with the new BWP. For example, as for a method of determining time domain resource allocation for a data channel, the BS may schedule the data channel after the BWP switching delay time in scheduling the data channel with the new BWP. Hence, the UE may not expect for the DCI that indicates BWP switching to indicate a slot offset value (K0 or K2) smaller than the BWP switching delay time $T_{BWP}$.

When the UE receives DCI (e.g., DCI format 1_1 or 0_1) that indicates BWP switching, the UE may not perform transmission or reception during a time interval from a third symbol of the slot in which a PDCCH including the DCI is received to a starting point of a slot indicated by the slot offset value (K0 or K2) indicated in a time domain resource allocation indicator field in the DCI. For example, when the UE has received DCI that indicates BWP switching in slot n and the slot offset value indicated by the DCI is K, the UE may not perform any transmission or reception from the third symbol of the slot n to a symbol before slot n+K, i.e., the last symbol of slot n+K-1.

[SS/PBCH block]

A synchronization signal (SS)/physical broadcast channel (PBCH) block in 5G will now be described.

An SS/PBCH block may refer to a physical layer channel block including primary SS (PSS), secondary SS (SSS), and PBCH, which are defined as follows:

- PSS: a reference signal for DL time/frequency synchronization, which provides partial information of a cell ID.
- SSS: a reference signal for DL time/frequency synchronization, which provides the rest of the cell ID information not provided by the PSS. It may also serve as another reference signal for demodulation of the PBCH.
- PBCH: a channel for providing essential system information required for transmission or reception of data channel and control channel for UE. The essential system information may include search-space-related control information indicating radio resource mapping information of the control channel, scheduling control information for an extra data channel that transmits system information.
- SS/PBCH block: SS/PBCH block is a combination of PSS, SSS, and PBCH. One or more SS/PBCH blocks may be transmitted in 5 ms, and each of the SS/PBCH block may be distinguished by an index.

The UE may detect the PSS and the SSS in the initial access process, and decode the PBCH. The UE may obtain an MIB from the PBCH and may be configured with control resource set (CORESET) #0 (corresponding to a control resource set indexed by 0) through the MIB. The UE may assume that a demodulation reference signal (DMRS) transmitted in the selected SS/PBCH block and control resource set #0 is quasi-colocated (QCL), and may perform monitoring on the control resource set #0. The UE may receive system information in the DL control information transmitted in the control resource set #0. The UE may obtain random-access-channel (RACH) related configuration information required for initial access from the received system information. The UE may transmit a physical RACH (PRACH) to the BS in consideration of the selected SS/PBCH index, and on reception of the PRACH, the BS may obtain information about the SS/PBCH block index selected by the UE. It may be understood that the BS selected any of the respective SS/PBCH blocks and is monitoring the control resource set #0 associated with the selected SS/PBCH.

[PDCCH: DCI]

DCI in the 5G system will now be described in detail.

In the 5G system, scheduling information for UL data (or physical uplink shared channel (PUSCH)) or DL data (or physical downlink shared channel (PDSCH)) is transmitted from the BS to the UE in DCI. The UE may monitor a fallback DCI format and a non-fallback DCI format for PUSCH or PDSCH. The fallback DCI format may include a fixed field predefined between the BS and the UE, and the non-fallback DCI format may include a configurable field.

The DCI may be transmitted on the physical downlink control channel (PDCCH) after going through channel coding and modulation processes. Cyclic redundancy check (CRC) may be appended to a DCI message payload, and the CRC may be scrambled by a radio network temporary identifier (RNTI) that corresponds to an ID of the UE. Depending on the use of the DCI message, e.g., UE-specific data transmission, power control instruction, random access response, or the like, different RNTIs may be used. In other words, the RNTI is not explicitly transmitted but is transmitted in a CRC calculation process. On reception of a DCI message transmitted on the PDCCH, the UE may check CRC using an allocated RNTI, and determine that the DCI message is transmitted to the UE when the CRC check result is correct.

For example, DCI that schedules a PDSCH for system information (SI) may be scrambled by SI-RNTI. DCI that schedules a PDSCH for a random access response (RAR) message may be scrambled by an RA-RNTI. DCI that schedules a PDSCH for a paging message may be scrambled by a P-RNTI. DCI that notifies a slot format indicator (SFI) may be scrambled by an SFI-RNTI. DCI that notifies a transmit power control (TPC) may be scrambled by a TPC-RNTI. DCI that schedules UE-specific PDSCH or PUSCH may be scrambled by a Cell RNTI (C-RNTI).

DCI format 0_0 may be used for the fallback DCI that schedules a PUSCH, in which case the CRC may be scrambled by a C-RNTI. The DCI format 0_0 with the CRC scrambled by a C-RNTI may include information e.g., in Table 4 below:

[Table 4]

- Identifier for DCI formats  – [1] bit

- Frequency domain resource assignment  – [$\lceil \log_2(N_{RB}^{UL,BWP}(N_{RB}^{UL,BWP}+1)/2)\rceil$] bits

- Time domain resource assignment  – X bits

- Frequency hopping flag  – 1 bit.

- Modulation and coding scheme  – 5 bits

- New data indicator  – 1 bit

- Redundancy version  – 2 bits

- HARQ process number  – 4 bits

- TPC command for scheduled PUSCH  – [2] bits

- UL/SUL indicator  – 0 or 1 bit

DCI format 0_1 may be used for the non-fallback DCI that schedules a PUSCH, in which case the CRC may be scrambled by a C-RNTI. The DCI format 0_1 with the CRC scrambled by a C-RNTI may include information e.g., in the following Table 5.

[Table 5]

- Carrier indicator - 0 or 3 bits
- UL/SUL indicator - 0 or 1 bit
- Identifier for DCI formats - [1] bits

(continued)

- Bandwidth part indicator - 0, 1 or 2 bits
- Frequency domain resource assignment

  • For resource allocation type 0, $\left\lceil N_{RB}^{UL,BWP} / P \right\rceil$ bits

  • For resource allocation type 1, $\left\lceil \log_2(N_{RB}^{UL,BWP}(N_{RB}^{UL,BWP} + 1)/2) \right\rceil$ bits

- Time domain resource assignment -1, 2, 3, or 4 bits
- VRB-to-PRB mapping - 0 or 1 bit, only for resource allocation type 1.
    • 0 bit if only resource allocation type 0 is configured;
    • 1 bit otherwise.
- Frequency hopping flag - 0 or 1 bit, only for resource allocation type 1.
    • 0 bit if only resource allocation type 0 is configured;
    • 1 bit otherwise.
- Modulation and coding scheme - 5 bits
- New data indicator - 1 bit
- Redundancy version - 2 bits
- HARQ process number - 4 bits
- 1st downlink assignment index - 1 or 2 bits
    • 1 bit for semi-static HARQ-ACK codebook;
    • 2 bits for dynamic HARQ-ACK codebook with single HARQ-ACK codebook.
- 2nd downlink assignment index - 0 or 2 bits
    • 2 bits for dynamic HARQ-ACK codebook with two HARQ-ACK sub-codebooks;
    • 0 bit otherwise.
- TPC command for scheduled PUSCH - 2 bits

- SRS resource indicator - $\left\lceil \log_2\left( \sum_{k=1}^{L_{max}} \binom{N_{SRS}}{k} \right) \right\rceil$ or $\left\lceil \log_2(N_{SRS}) \right\rceil$ bits

$$\left\lceil \log_2\left( \sum_{k=1}^{L_{max}} \binom{N_{SRS}}{k} \right) \right\rceil$$

    • bits for non-codebook based PUSCH transmission;

    • $\left\lceil \log_2(N_{SRS}) \right\rceil$ bits for codebook based PUSCH transmission.

- Precoding information and number of layers-up to 6 bits
- Antenna ports - up to 5 bits
- SRS request - 2 bits
- CSI request - 0, 1, 2, 3, 4, 5, or 6 bits
- CBG transmission information - 0, 2, 4, 6, or 8 bits
- PTRS-DMRS association - 0 or 2 bits.
- beta_offset indicator - 0 or 2 bits
- DMRS sequence initialization - 0 or 1 bit

DCI format 1_0 may be used for the fallback DCI that schedules a PDSCH, in which case the CRC may be scrambled by a C-RNTI. The DCI format 1_0 with the CRC scrambled by a C-RNTI may include information e.g., in Table 6 below:

[Table 6]

| | |
|---|---|
| – | Identifier for DCI formats – [1] bit |
| – | Frequency domain resource assignment –$\left[\log_2(N_{RB}^{DL,BWP}(N_{RB}^{DL,BWP}+1)/2)\right]$ bits |
| – | Time domain resource assignment – X bits |
| – | VRB-to-PRB mapping – 1 bit. |
| – | Modulation and coding scheme – 5 bits |
| – | New data indicator – 1 bit |
| – | Redundancy version – 2 bits |
| – | HARQ process number – 4 bits |
| – | Downlink assignment index – 2 bits |
| – | TPC command for scheduled PUCCH – [2] bits |
| – | PUCCH resource indicator – 3 bits |
| – | PDSCH-to-HARQ feedback timing indicator – [3] bits |

DCI format 1_1 may be used for the non-fallback DCI that schedules a PDSCH, in which case the CRC may be scrambled by a C-RNTI. The DCI format 1_1 with the CRC scrambled by a C-RNTI may include information e.g., in the following Table 7.

[Table 7]

EP 4 611 460 A1

- Carrier indicator – 0 or 3 bits
- Identifier for DCI formats – [1] bits
- Bandwidth part indicator – 0, 1 or 2 bits
- Frequency domain resource assignment
  - For resource allocation type 0, $\left\lceil N_{RB}^{DL,BWP} / P \right\rceil$ bits
  - For resource allocation type 1, $\left\lceil \log_2(N_{RB}^{DL,BWP}(N_{RB}^{DL,BWP} + 1)/2) \right\rceil$ bits
- Time domain resource assignment – 1, 2, 3, or 4 bits
- VRB-to-PRB mapping – 0 or 1 bit, only for resource allocation type 1.
  - 0 bit if only resource allocation type 0 is configured;
  - 1 bit otherwise.
- PRB bundling size indicator – 0 or 1 bit
- Rate matching indicator – 0, 1, or 2 bits
- ZP CSI-RS trigger – 0, 1, or 2 bits

For transport block 1 :

- Modulation and coding scheme – 5 bits
- New data indicator – 1 bit
- Redundancy version – 2 bits

For transport block 2 :

- Modulation and coding scheme – 5 bits
- New data indicator – 1 bit
- Redundancy version – 2 bits
- HARQ process number – 4 bits
- Downlink assignment index – 0 or 2 or 4 bits
- TPC command for scheduled PUCCH – 2 bits
- PUCCH resource indicator – 3 bits
- PDSCH-to-HARQ_feedback timing indicator – 3 bits
- Antenna ports – 4, 5 or 6 bits
- Transmission configuration indication – 0 or 3 bits
- SRS request – 2 bits
- CBG transmission information – 0, 2, 4, 6, or 8 bits
- CBG flushing out information – 0 or 1 bit
- DMRS sequence initialization – 1 bit

[PDCCH: CORESET, REG, CCE, Search Space]

A DL control channel in the 5G communication system will now be described in detail with reference to related drawings.

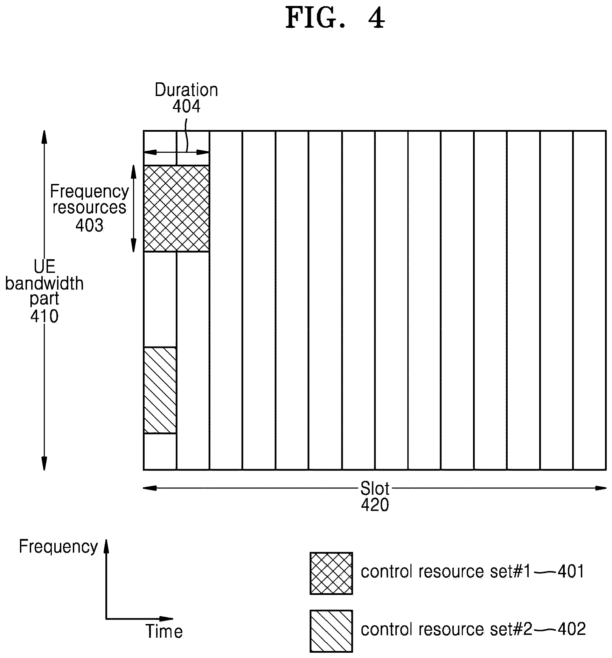

Specifically, FIG. 4 shows an example of control resource sets (or CORESETs) in which a DL control channel is transmitted in the 5G wireless communication system. In the example of FIG. 4, UE BWP 410 is configured on the frequency axis, and two control resource sets, control resource set #1 401 and control resource set #2 402, are configured on the time axis in a slot 420. The CORESETs 401 and 402 may be configured in a particular frequency resource 403 in the entire UE BWP 410 on the frequency axis. One or more OFDM symbols may be configured on the time axis, and defined as control resource set duration 404. In the example of FIG. 4, the control resource set #1 401 is configured to have the control resource set duration of two symbols, and the control resource set #2 402 is configured to have the control resource set duration of one symbol.

As described above, in 5G, the control resource set may be configured by the BS for the UE through higher layer signaling, e.g., system information (SI), MIB, or radio resource control (RRC) signaling. Configuring the UE with a control

13

resource set means providing the UE with information such as a control resource set ID, a frequency location of the control resource set, length of symbols of the control resource set, etc. For example, information in Table 8 may be included.

[Table 8]

```
ControlResourceSet ::=                        SEQUENCE {
        -- Corresponds to L1 parameter 'CORESET-ID'

        controlResourceSetId              ControlResourceSetId,
        ( Identity of control resource )
        frequencyDomainResources          BIT STRING (SIZE (45)),
        ( Frequecy domain resource allocation information )
        duration                          INTEGER (1..maxCoReSetDuration),
        ( Time domain resource allocation information )
        cce-REG-MappingType               CHOICE {
        (CCE-to-REG mapping type )
            interleaved                       SEQUENCE {

                reg-BundleSize                    ENUMERATED {n2, n3, n6},
                (REG bundle size )

                precoderGranularity               ENUMERATED {sameAsREG-bundle,
                allContiguousRBs},

                interleaverSize                   ENUMERATED {n2, n3, n6}
                ( Interleaver size )

                shiftIndex
                INTEGER(0..maxNrofPhysicalResourceBlocks-1)
                    OPTIONAL
                    ( Interleaver shift )
                },
            nonInterleaved                    NULL.
        },
        tci-StatesPDCCH                   SEQUENCE(SIZE (1..maxNrofTCI-
            StatesPDCCH)) OF TCI-StateId            OPTIONAL,
        (QCL configuration information )
        tci-PresentInDCI                  ENUMERATED
            {enabled}                             OPTIONAL,    -- Need S
}
```

In Table 8, tci-StatesPDCCH (hereinafter, referred to as a transmission configuration indication (TCI) state) configuration information may include information about one or more synchronization signal (SS)/PBCH block indexes having the quasi co-located (QCL) relation with the DMRS transmitted in the corresponding control resource set or channel state information reference signal (CSI-RS) indexes.

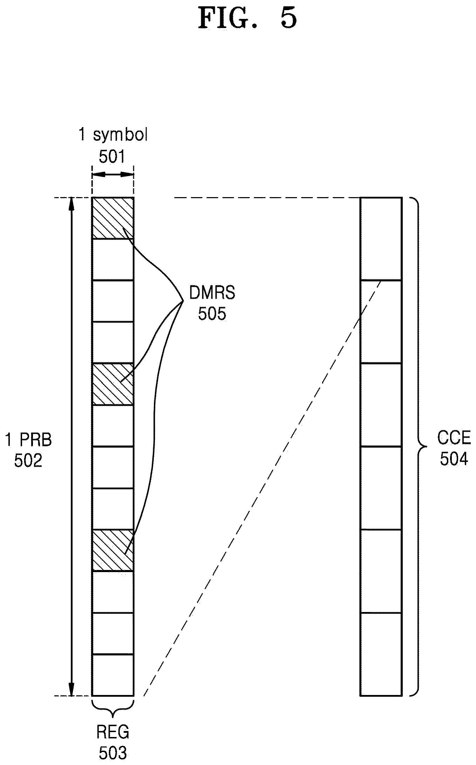

FIG. 5 illustrates an example of a basic unit of time and frequency resource that forms a DL control channel to be used in 5G. Referring to FIG. 5, a basic unit of time and frequency resource that forms a control channel is referred to as a resource element group (REG) 503. The REG 503 may be defined by one OFDM symbol 501 on the time axis and one physical resource block (PRB) 502, i.e., 12 subcarriers on the frequency axis. The BS may configure a DL control channel allocation unit by connecting REGs 503.

In FIG. 5, when the DL control channel allocation unit is called a control channel element (CCE) 504 in 5G, one CCE 504 may include a plurality of REGs 503. For example, as shown in FIG. 5, the REG 503 may include 12 REs, and when one CCE 504 includes 6 REGs 503, the one CCE 504 may include 72 REs. When the DL control resource set is configured, it may include a plurality of CCEs 504, and a particular DL control channel may be transmitted by being mapped to one or more CCEs 504 based on an aggregation level (AL) in the control resource set. The CCEs 504 in the control resource set may be distinguished by numbers, which may be allocated to the CCEs 504 in a logical mapping method.

The basic unit of the DL control channel shown in FIG. 5, i.e., the REG 503, may include both REs to which DCI is mapped and an area to which DMRS 505 that is a reference signal to decode them is mapped. As shown in FIG. 5, three DMRSs 505 may be transmitted in one REG 503. The number of CCEs required to transmit the PDCCH may be 1, 2, 4, 8, or 16 depending on the AL, and different numbers of CCEs may be used to implement link adaptation of the DL control channel. For example, when AL=L, a single DL control channel may be transmitted in L CCEs. The UE needs to detect a signal without knowing information about the DL control channel, and search space representing a set of CCEs is defined for the blind decoding. The search space is a set of DL control channel candidates that include CCEs on which the UE needs to try decoding at a given AL, and the UE may have a plurality of search spaces because there are various ALs each making a bundle with 1, 2, 4, 8, or 16 CCEs. A search space set may be defined as a set of search spaces at all the set ALs.

The search spaces may be classified into common search spaces and UE-specific search spaces. A certain group of UEs or all the UEs may check into a common search space of the PDCCH to dynamically schedule the system information or receive cell-common control information, such as a paging message. For example, PDSCH scheduling allocation information for transmitting a system information block (SIB) including cell operator information or the like may be received by checking into the common search space of the PDCCH. For the common search space, a certain group of UEs or all the UEs need to receive the PDCCH, so the common search space may be defined as a set of pre-appointed CCEs. UE-specific PDSCH or PUSCH scheduling allocation information may be received by checking into the UE-specific search space of the PDCCH. The UE-specific search space may be UE-specifically defined based on a function of various system parameters and an ID of the UE.

In 5G, parameters of the search space of the PDCCH may be configured by the BS for the UE in upper layer signaling (e.g., SIB, MIB, or RRC signaling). For example, the BS may configure the number of PDCCH candidates at each AL, monitoring periodicity for the search space, monitoring occasion in symbols in the slot for the search space, a type of the search space (common search space or UE-specific search space), a combination of a DCI format to be monitored in the search space and an RNTI, a control resource set index to monitor the search space, etc., for the UE. For example, information in Table 9 may be included.

[Table 9]

```
SearchSpace ::=                          SEQUENCE {
    -- Identity of the search space. SearchSpaceId = 0
    identifies the SearchSpace configured via PBCH (MIB) or
    ServingCellConfigCommon.
    searchSpaceId                        SearchSpaceId,
    ( Search space identity )
    controlResourceSetId                 ControlResourceSetId,
    ( Control resource identity )
    monitoringSlotPeriodicityAndOffset   CHOICE {
    ( Monitoring slot level periodicty )
        sl1                              NULL,
        sl2                              INTEGER (0..1),
        sl4                              INTEGER (0..3),
        sl5                              INTEGER (0..4),
        sl8                              INTEGER (0..7),
        sl10                             INTEGER (0..9),
        sl16                             INTEGER (0..15),
        sl20                             INTEGER (0..19)
    }
                                         OPTIONAL,
    duration( Monitoring duration )      INTEGER (2..2559)
    monitoringSymbolsWithinSlot          BIT STRING (SIZE
        (14))                                              OPTIONAL,
    ( Monitoring symbols within slot )
    nrofCandidates                       SEQUENCE {
    ( Number of PDCCH candidates at each aggregation level )
        aggregationLevel1                ENUMERATED {n0, n1, n2, n3, n4, n5, n6, n8},
        aggregationLevel2                ENUMERATED {n0, n1, n2, n3, n4, n5, n6, n8},
        aggregationLevel4                ENUMERATED {n0, n1, n2, n3, n4, n5, n6, n8},
        aggregationLevel8                ENUMERATED {n0, n1, n2, n3, n4, n5, n6, n8},
        aggregationLevel16               ENUMERATED {n0, n1, n2, n3, n4, n5, n6, n8}
    },

    searchSpaceType                      CHOICE {
    ( Search space type )
        -- Configures this search space as common search space (CSS) and DCI formats to monitor.
        common                           SEQUENCE {
        ( Common search space )
        }
        ue-Specific                      SEQUENCE {
        ( UE-specific search space )
            -- Indicates whether the UE monitors in this USS for DCI formats 0-0 and 1-0 or for formats 0-1 and 1-1.
            formats                      ENUMERATED {formats0-0-And-1-0, formats0-1-And-1-1},
            ...
        }
```

Based on the configuration information, the BS may configure the UE with one or more search space sets. In an embodiment, the BS may configure the UE with search space set 1 and search space set 2, configure the UE to monitor DCI format A scrambled by X-RNTI in the search space set 1 in the common search space and monitor DCI format B scrambled by Y-RNTI in the search space set 2 in the UE-specific search space.

The configuration information may indicate that there is one or more search space sets in the common or UE-specific search space. For example, search space set #1 and search space set #2 may be configured as the common search space, and search space set #3 and search space set #4 may be configured as the UE-specific search space.

In the common search space, the following combinations of DCI formats and RNTIs may be monitored. Obviously, it is not limited to the following examples.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, the following combinations of DCI formats and RNTIs may be monitored. Obviously, it is not limited to the following examples.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The enumerated RNTIs may follow the following definitions and uses.

C-RNTI (Cell RNTI): used for UE-specific PDSCH scheduling
TC-RNTI (Temporary Cell RNTI): used for UE-specific PDSCH scheduling
CS-RNTI (Configured Scheduling RNTI): used for semi-statically configured UE-specific PDSCH scheduling
RA-RNTI (Random Access RNTI): used for PDSCH scheduling in a random access process
P-RNTI (Paging RNTI): used for scheduling a PDSCH on which paging is transmitted
SI-RNTI (System Information RNTI): used for scheduling a PDSCH on which system information is transmitted
INT-RNTI (Interruption RNTI): used for indicating whether to puncture the PDSCH
TPC-PUSCH-RNTI (Transmit Power Control for PUSCH RNTI): used for indicating power control command for a PUSCH
TPC-PUCCH-RNTI (Transmit Power Control for PUCCH RNTI): used for indicating power control command for a PUCCH
TPC-SRS-RNTI (Transmit Power Control for SRS RNTI): used for indicating power control command for an SRS

The aforementioned DCI formats may conform to definitions such as an example of Table 10 below.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In 5G, with control resource set p and search space set s, a search space at aggregation level L may be expressed as in Equation 1 below:

【Equation 1】

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor \frac{N_{CCE,p}}{L} \right\rfloor \right\} + i$$

- L: aggregation level

- $n_{CI}$: Carrier Index

- $N_{CCE,p}$ : total number of CCEs existing in control resource set p

- $n_{s,f}^{\mu}$ : slot index

- $M_{s,max}^{(L)}$ : the number of PDCCH candidates at aggregation level L

- $m_{s,n_{CI}} = 0,\ldots, M_{s,max}^{(L)}$ -1 indexes of PDCCH candidates at aggregation level L

- i = 0,...,L-1

- $Y_{p,n_{s,f}^{\mu}} = \left(A_p \cdot Y_{p,n_{s,f}^{\mu}-1}\right) mod\ D$ , $Y_{p,-1} = n_{RNTI} \neq 0, A_p = 39827\ for\ p\ mod\ 3 = 0, A_p = 39829\ for\ p\ mod\ 3 = 1$

$A_p = 39839\ for\ p\ mod\ 3 = 2\ D = 65537$

- $n_{RNTI}$ : UE identifier

A value of $Y_{p,n_{s,f}^{\mu}}$ may correspond to 0 for common search space.

A value of $Y_{p,n_{s,f}^{\mu}}$ may correspond to a value that changes by a UE Identity (C-RNTI or ID configured by the BS for the UE) and time index for the UE-specific search space.

As it is possible to configure a plurality of search space sets with different parameters (e.g., the parameters in Table 9) in 5G, the UE may monitor a different search space set every time. For example, when the search space set #1 is configured with X-slot periodicity and the search space set #2 is configured with Y-slot periodicity, where X and Y are different, the UE may monitor both the search space set #1 and the search space set #2 in a particular slot, and monitor one of the search space set #1 and the search space set #2 in another particular slot.

[PDCCH: BD/CCE limit]

When a plurality of search space sets are configured for the UE, the following conditions may be taken into account in a method for determining a search space set to be monitored by the UE.
When the UE is configured with a value of higher layer signaling monitoringCapabilityConfig-r16 as r15monitoringcapability, the UE defines maximum values of the number of PDCCH candidates to be monitored and the number of CCEs that make up the entire search space (the term entire search space refers to an entire CCE set corresponding to a union region of a plurality of search space sets) for each slot, and when the UE is configured with a value of monitoringCapabilityConfig-r16 as r16monitoringcapability, the UE defines maximum values of the number of PDCCH candidates to be monitored and the number of CCEs that make up the entire search space for each span.

[Condition 1: restriction on the maximum number of PDCCH candidates]

The maximum number $M^{\mu}$ of PDCCH candidates to be monitored by the UE may follow Table 11 below when defined on a slot basis and follow Table 12 when defined on a span basis in a cell configured with subcarrier spacing $15\cdot2^{\mu}$ kHz , depending on the configuration value of higher layer signaling as described above.

[Table 11]

| $\mu$ | Maximum number of PDCCH candidates per slot and per serving cell ($M^{\mu}$) |
|---|---|
| 0 | 44 |

(continued)

| $\mu$ | Maximum number of PDCCH candidates per slot and per serving cell ($M^\mu$) |
|---|---|
| l | 36 |
| 2 | 22 |
| 3 | 20 |

[Table 12]

| | Maximum number $M^\mu$ of monitored PDCCH candidates per span for combination (X,Y) and per serving cell | | |
|---|---|---|---|
| $\mu$ | (2,2) | (4,3) | (7,3) |
| 0 | 14 | 28 | 44 |
| 1 | 12 | 24 | 36 |

[Condition 2: restriction on the maximum number of CCEs]

The maximum number $C^\mu$ of CCEs that make up the entire search space may follow Table 13 when defined on a slot basis and follow Table 14 when defined on a span basis in a cell configured with subcarrier spacing $15 \cdot 2^\mu$ kHz , depending on the configuration value of higher layer signaling as described above.

[Table 13]

| $\mu$ | Maximum number of non-overlapped CCEs per slot and per serving cell ($C^\mu$) |
|---|---|
| 0 | 56 |
| 1 | 56 |
| 2 | 48 |
| 3 | 32 |

[Table 14]

| | Maximum number $C^\mu$ of non-overlapped CCEs per span for combination (X,Y) and per serving cell | | |
|---|---|---|---|
| $\mu$ | (2,2) | (4,3) | (7,3) |
| 0 | 18 | 36 | 56 |
| 1 | 18 | 36 | 56 |

For convenience of explanation, a situation that satisfies both conditions 1 and 2 at a particular time is defined as "condition A". Accordingly, failing to satisfy the condition A may mean that at least one of the conditions 1 and 2 is not satisfied.

[Rate matching/Puncturing]

Rate matching and puncturing operations will now be described in detail.
When time and frequency resource A in which to transmit arbitrary symbol sequence A overlaps time and frequency resource B, rate matching or puncturing operation may be considered for transmission and reception operations in channel A in consideration of resource C corresponding to the overlapping portion of the resource A and resource B. Details may be as follows.
Rate matching operation

-    the BS may transmit the symbol sequence A by mapping the channel A only to the remaining resource area of the entire resource A in which to transmit the symbol sequence A to the UE, excluding an area corresponding to resource C overlapping the resource B. For example, when the symbol sequence A includes {symbol #1, symbol #2, symbol #3, and symbol #4}, the resource A includes {resource #1, resource #2, resource #3 and, resource #4} and the resource B includes {resource #3 and resource #5}, the BS may transmit the symbol sequence A by sequentially mapping the symbol sequence A to resources {resource #1, resource #2, and resource #4} of the resource A excluding {resource #3} corresponding to the resource C. As a result, the BS may transmit the symbol sequence {symbol #1, symbol #2, and symbol #3} by mapping them to {resource #1, resource #2, and resource #4}, respectively.

The UE may determine the resource A and the resource B from scheduling information for the symbol sequence A from the BS, and may determine the resource C corresponding to an overlapping portion between the resource A and the resource B. The UE may receive the symbol sequence A on the assumption that the symbol sequence A is transmitted by being mapped to the entire resource A except for the resource C. For example, when the symbol sequence A includes {symbol #1, symbol #2, symbol #3, and symbol #4}, the resource A includes {resource #1, resource #2, resource #3 and, resource #4} and the resource B includes {resource #3 and resource #5}, the UE may receive the symbol sequence A on the assumption that the symbol sequence A is sequentially mapped to resources {resource #1, resource #2, and resource #4} of the resource A excluding {resource #3} corresponding to the resource C. As a result, the UE may assume that the symbol sequence {symbol #1, symbol #2, and symbol #3} is transmitted by being mapped to {resource #1, resource #2, and resource #4}, respectively, and perform a series of next operations.

Puncturing operation

When there is the resource C corresponding to an overlapping portion between the entire resource A in which to transmit the symbol sequence A to the UE and the resource B, the BS may map the symbol sequence A to the entire resource A but may perform transmission in the resource portions of the resource A except for the resource C without performing transmission in the resource portion corresponding to the resource C. For example, when the symbol sequence A includes {symbol #1, symbol #2, symbol #3, and symbol #4}, the resource A includes {resource #1, resource #2, resource #3 and, resource #4} and the resource B includes {resource #3 and resource #5}, the BS may map the symbol sequence A {symbol #1, symbol #2, symbol #3, and symbol #4} to the resource A {resource #1, resource #2, resource #3 and resource #4}, and transmit a symbol sequence {symbol #1, symbol #2, and symbol #4} corresponding to resource portions {resource #1, resource #2, and resource #4} of the resource A excluding {resource #3} corresponding to the resource C without transmitting {symbol #3} mapped to {resource #3} corresponding to the resource C. As a result, the BS may transmit the symbol sequence {symbol #1, symbol #2, and symbol #4} by mapping them to {resource #1, resource #2, and resource #4}, respectively.

The UE may determine the resource A and the resource B from scheduling information for the symbol sequence A from the BS, and may determine the resource C corresponding to an overlapping portion between the resource A and the resource B. The UE may receive the symbol sequence A on the assumption that the symbol sequence A is mapped to the entire resource A but transmitted in all the portions of the resource A with the exception of the resource C. For example, when the symbol sequence A includes {symbol #1, symbol #2, symbol #3, and symbol #4}, the resource A includes {resource #1, resource #2, resource #3 and, resource #4} and the resource B includes {resource #3 and resource #5}, the UE may perform reception while assuming that the symbol sequence A {symbol #1, symbol #2, symbol #3, and symbol #4} are mapped to the resource A {resource #1, resource #2, resource #3 and resource #4}, but {symbol #1, symbol #2, and symbol #4} of the symbol sequence A mapped to {resource #1, resource #2, and resource #4} are transmitted without {symbol #3} mapped to {resource #3} corresponding to the resource C. As a result, the UE may assume that the symbol sequence {symbol #1, symbol #2, and symbol #4} is transmitted by being mapped to {resource #1, resource #2, and resource #4}, respectively, and perform a series of next operations.

A method of configuring a rate matching resource for the purpose of rate matching in a 5G communication system will now be described. Rate matching refers to regulating the magnitude of a signal by taking into account a quantity of resource in which to transmit the signal. For example, rate matching of a data channel may refer to regulating the size of data by not mapping and transmitting the data channel to a particular time and frequency resource portion.

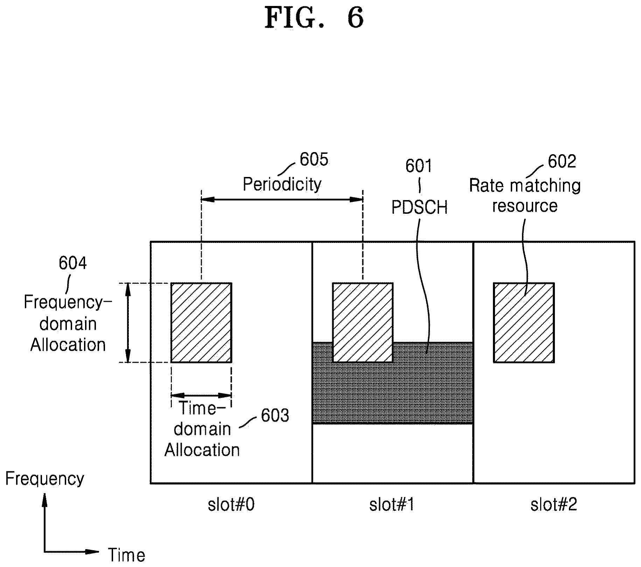

FIG. 6 is a diagram for describing how the BS and the UE transmit or receive data by considering a DL data channel and a rate matching resource.

In FIG. 6, shown are a DL data channel (PDSCH) 601 and a rate matching resource 602. The BS may configure the UE with one or more rate matching resources 602 through higher layer signaling (e.g., RRC signaling). Configuration information for the rate matching resource 602 may include time domain resource allocation information 603, frequency domain resource allocation information 604, and periodicity information 605. In the following description, a bitmap corresponding to the frequency domain resource allocation information 604 will be denoted as a "first bitmap", a bitmap corresponding to the time domain resource allocation information 603 a "second bitmap", and a bitmap corresponding to the periodicity information 605 a "third bitmap". When all or some of time and frequency resources of the scheduled data channel 601 overlap the configured rate matching resource 602, the BS may transmit the data channel 601 by rate matching of the data channel 601 in a portion of the rate matching resource 602 and the UE may assume that the data channel 601 was rate matched in the portion of the rate matching resource 602 and then receive and decode the data channel 601.

Through an additional configuration, the BS may dynamically notify whether to perform rate matching on the data channel in the portion of the configured rate matching resource to the UE through DCI (corresponding to the "rate matching indicator" in the DCI format as described above). Specifically, the BS may select and group some of the configured rate matching resources into a rate matching resource group, and indicate whether to perform rate matching on the data channel for each rate matching resource group to the UE by DCI in a bitmap form. For example, when there are four rate matching resources configured, e.g., RMR#1, RMR#2, RMR#3, and RMR#4, the BS may configure rate matching groups RMG#1={RMR#1, RMR#2} and RMG#2={RMR#3, RMR#4} and use two bits in a DCI field to indicate whether to perform rate matching in each of RMG#1 and RMG#2 to the UE in a bitmap. For example, it may be indicated with "1" when the rate matching needs to be performed, and "0" when the rate matching does not need to be performed.

5G supports "RB symbol level" and "RE level" granularities for a method of configuring the UE with the rate matching resource. Specifically, it may follow the following configuration method.

RB symbol level

The UE may be configured with up to four RateMatchPatterns for each BWP by higher layer signaling, and one RateMatchPattern may include the following things:

- for a reserved resource in a BWP, a resource configured with time and frequency resource region of the reserved resource in a combination of a symbol level bitmap and an RB level bitmap in the frequency domain may be included. The reserved resource may span one or two slots. A time domain pattern (periodicityAndPattern) in which a time and frequency region comprised of an RB-level and symbol-level bitmap pair is repeated may be additionally configured.
- a time and frequency domain resource region configured with a CORESET in a BWP and a resource region corresponding to a time domain pattern configured with a search space configuration in which the time and frequency domain resource region is repeated may be included.

RE level

The UE may be configured with the following things through higher layer signaling.

- configuration information (lte-CRS-ToMatchAround) for an RE corresponding to an LTE cell-specific reference signal or common reference signal (CRS) pattern, which may include the number of LTE CRS ports (nrofCRS-Ports), an LTE-CRS-vshift(s) value (v-shift), center subcarrier location information (carrierFreqDL) of an LTE carrier from a reference frequency point (e.g., reference point A), bandwidth size information of an LTE carrier (carrierBandwidthDL), subframe configuration information (mbsfn-SubframConfigList) corresponding to a multicast-broadcast single-frequency network (MBSFN). The UE may determine a location of a CRS in an NR slot corresponding to an LTE subframe based on the aforementioned information.
- configuration information about a resource set corresponding to one or multiple zero power (ZP) CSI-RSs in a BWP.

[PDSCH/PUSCH: time resource allocation]

A time domain resource allocation method for a data channel in the next generation mobile communication system (5G or NR system) will now be described.

The BS may configure the UE with a table of time domain resource allocation information for a DL data channel (physical downlink shared channel, PDSCH) and a UL data channel (physical uplink shared channel, PUSCH) by higher layer signaling (e.g., RRC signaling). For the PDSCH, a table including up to 16 (maxNrofDL-Allocations=16) entries may be configured, and for the PUSCH, a table including up to 16 (maxNrofUL-Allocations=16) entries may be configured. In an embodiment, the time domain resource allocation information may include PDCCH-to-PDSCH slot timing (corresponding to a time interval in slots between PDCCH reception time and PDSCH transmission time scheduled on the received PDCCH, and denoted as K0), PDCCH-to-PUSCH slot timing (corresponding to a time interval in slots between PDCCH reception time and PUSCH transmission time scheduled on the received PDCCH, and denoted as K2), information about location and length of a start symbol scheduled on the PDSCH or the PUSCH in the slot, a mapping type of PDSCH or PUSCH, etc. For example, information as in Table 15 or Table 16 below may be transmitted from the BS to the UE.

[Table 15]

| PDSCH-TimeDomainResourceAllocationList information element |
|---|
| ```
PDSCH-TimeDomainResourceAllocationList ::=   SEQUENCE (SIZE(1..maxNrofDL-Allocations)) OF
PDSCH-TimeDomainResourceAllocation

PDSCH-TimeDomainResourceAllocation ::= SEQUENCE {
    k0                                                              INTEGER(0..32)
OPTIONAL,    -- Need S
    (PDCCH-to-PDSCH timing, by slot )
    mappingType                          ENUMERATED (typeA, typeB),
    (PDSCH mapping type )
    startSymbolAndLength                 INTEGER (0..127)
    ( Start symbol and length of PDSCH )
}
``` |

[Table 16]

| PUSCH-TimeDomainResourceAllocation information element |
|---|
| ```
PUSCH-TimeDomainResourceAllocationList ::=  SEQUENCE   (SIZE(1..maxNrofUL-Allocations))   OF
PUSCH-TimeDomainResourceAllocation

PUSCH-TimeDomainResourceAllocation ::=  SEQUENCE {
    k2                          INTEGER(0..32)        OPTIONAL,   -- Need S
    (PDCCH-to-PUSCH timing, by slot )
    mappingType                          ENUMERATED (typeA, typeB),
    (PUSCH mapping type )
    startSymbolAndLength                 INTEGER (0..127)
    ( Start symbol and length of PUSCH )
}
``` |

The BS may notify the UE of at least one of the entries in the table about the time domain resource allocation information by L1 signaling (e.g., in DCI, especially in a 'time domain resource allocation' field in the DCI). The UE may obtain the time domain resource allocation information for the PDSCH or the PUSCH based on the DCI received from the BS.

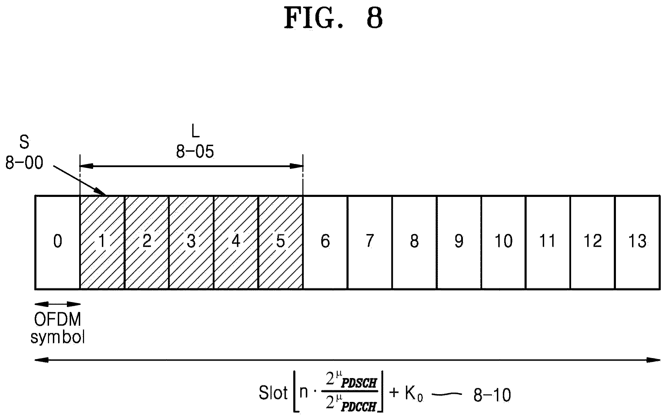

FIG. 8 illustrates an example of PDSCH time domain resource allocation in a wireless communication system, according to various embodiments of the disclosure.

Referring to FIG. 8, the BS may indicate a position of a PDSCH resource in the time domain based on subcarrier spacings (SCSs) on a data channel and a control channel ($\mu_{PDSCH}, \mu_{PDCCH}$) and a scheduling offset K0, which are set using a higher layer, and a starting position 8-00 and length 8-05 of OFDM symbols in a slot dynamically indicated in DCI.

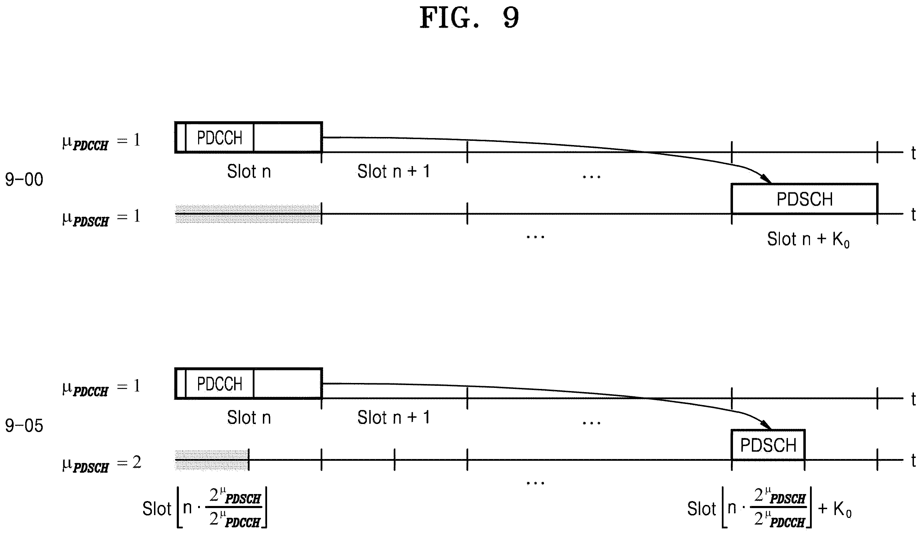

FIG. 9 illustrates an example of time domain resource allocation based on SCS of a data channel and a control channel in a wireless communication system, according to an embodiment of the disclosure.

Referring to FIG. 9, when the data channel and the control channel have the same SCS ($\mu_{PDSCH} = \mu_{PDCCH}$) (9-00), slot numbers are the same for data and control, so the BS and the UE may generate a scheduling offset to match the preset slot offset K0. On the other hand, when the data channel and the control channel have different SCSs ($\mu_{PDSCH} \neq \mu_{PDCCH}$) (9-05), slot numbers are different for data and control, so the BS and the UE may generate a scheduling offset to match the preset slot offset K0 based on the SCS of the PDCCH.

[PDSCH: frequency resource allocation]

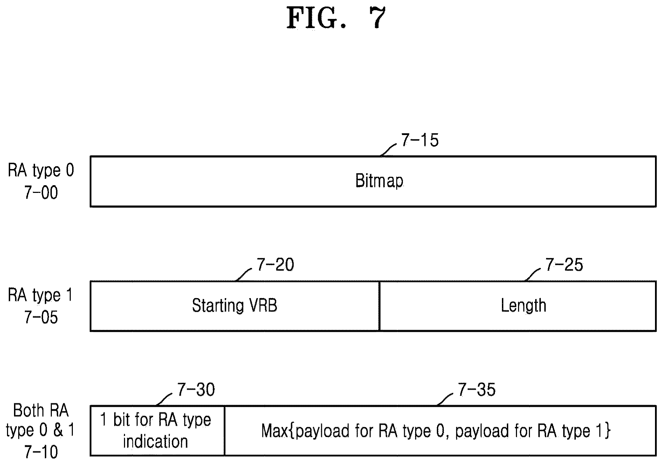

FIG. 7 illustrates an example of PDSCH frequency domain resource allocation in a wireless communication system, according to an embodiment of the disclosure.

Specifically, FIG. 7 shows three frequency domain resource allocation methods, which are type 0 7-00, type 1 7-05, and dynamic switching 7-10, which are configurable through a higher layer in NR wireless communication system.

Referring to FIG. 7, when the UE is configured by higher layer signaling to use resource type 0 only (7-00), some DCI to allocate a PDSCH for the UE includes a bitmap comprised of NRBG bits. Conditions for this will be described later. The NRGB refers to the number of resource block groups (RBGs) determined as in the following Table 17 according to a size of a BWP allocated by the BWP indicator and an upper layer parameter rbg-Size, and data is transmitted in an RBG represented by 1 based on the bitmap.

[Table 17]

| Bandwidth Part Size | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

When the UE is configured by higher layer signaling to use resource type 1 only (7-05), some DCI to allocate a PDSCH for the UE includes frequency domain resource allocation information comprised of

$$\left\lceil \log_2 (N_{RB}^{DL,BWP} (N_{RB}^{DL,BWP} +1)/2 \right\rceil$$

bits. Conditions for this will be described later. This may allow the BS to set a starting VRB 7-20 and length of frequency domain resources 7-25 successively allocated from the starting VRB 7-20.

When the UE is configured to use both the resource type 0 and the resource type 1 through higher layer signaling (7-10), some DCI to allocate a PDSCH for the UE includes frequency domain resource allocation information in bits 7-35 corresponding to a larger one of a payload 7-15 for configuring the resource type 0 and a payload 7-20 and 7-25 for configuring the resource type 1. Conditions for this will be described later. In this case, one bit may be added to the most significant bit (MSB) of the frequency domain allocation information in the DCI, and when the bit has a value of '0', it indicates that the resource type 0 is used, and when the bit has a value of '1', it indicates that the resource type 1 is used.

[PUSCH: transmission scheme]

A PUSCH transmission scheduling scheme will now be described. PUSCH transmission may be dynamically scheduled by UL grant in DCI, or operated by configured grant Type 1 or Type 2. Dynamic scheduling indication for PUSCH transmission may be indicated by DCI format 0_0 or 0_1.

Configured grant Type 1 PUSCH transmission may be quasi-statically configured not by receiving UL grant in DCI but by receiving configuredGrantConfig including rrc-ConfiguredUplinkGrant of Table 18 through higher layer signaling. Configured grant Type 2 PUSCH transmission may be semi-persistently scheduled by UL grant in DCI after reception of configuredGrantConfig that does not include rrc-ConfiguredUplinkGrant of Table 18 through higher layer signaling. When the PUSCH transmission is operated by configured grant, parameters applied to the PUSCH transmission are applied through higher layer signaling configuredGrantConfig of Table 18 with the exception of dataScramblingIdentityPUSCH, txConfig, codebookSubset, maxRank, scaling of UCI-OnPUSCH provided by higher layer signaling, pusch-Config of Table 19. When the UE receives transformPrecoder in higher layer signaling configuredGrantConfig of Table 18, the UE applies tp-pi2BPSK in pusch-Config of Table 19 for the PUSCH transmission operated by the configured grant.

[Table 18]

```
ConfiguredGrantConfig ::=            SEQUENCE {
        frequencyHopping                ENUMERATED {intraSlot, interSlot}
OPTIONAL,    -- Need S,
        cg-DMRS-Configuration           DMRS-UplinkConfig,
        mcs-Table                       ENUMERATED {qam256, qam64LowSE}
OPTIONAL,    -- Need S
        mcs-TableTransformPrecoder      ENUMERATED {qam256, qam64LowSE}
OPTIONAL,    -- Need S
        uci-OnPUSCH                     SetupRelease { CG-UCI-OnPUSCH }
OPTIONAL,    -- Need M
        resourceAllocation              ENUMERATED { resourceAllocationType0,
        resourceAllocationType1, dynamicSwitch },
        rbg-Size                        ENUMERATED {config2}
OPTIONAL,    -- Need S
        powerControlLoopToUse           ENUMERATED {n0, n1},
        p0-PUSCH-Alpha                  P0-PUSCH-AlphaSetId,
        transformPrecoder               ENUMERATED {enabled, disabled}
OPTIONAL,    -- Need S
        nrofHARQ-Processes              INTEGER(1..16),
        repK                            ENUMERATED {n1, n2, n4, n8},
        repK-RV                         ENUMERATED {s1-0231, s2-0303, s3-0000}
OPTIONAL,    -- Need R
        periodicity                     ENUMERATED {
                                        sym2, sym7, sym1x14, sym2x14,
        sym4x14, sym5x14, sym8x14, sym10x14, sym16x14, sym20x14,
                                        sym32x14, sym40x14, sym64x14,
        sym80x14, sym128x14, sym160x14, sym256x14, sym320x14, sym512x14,
                                        sym640x14, sym1024x14, sym1280x14,
        sym2560x14, sym5120x14,
                                        sym6, sym1x12, sym2x12, sym4x12,
        sym5x12, sym8x12, sym10x12, sym16x12, sym20x12, sym32x12,
                                        sym40x12, sym64x12, sym80x12,
        sym128x12, sym160x12, sym256x12, sym320x12, sym512x12, sym640x12,
                                        sym1280x12, sym2560x12
        },
        configuredGrantTimer            INTEGER (1..64)
OPTIONAL,    -- Need R
        rrc-ConfiguredUplinkGrant       SEQUENCE {
            timeDomainOffset                INTEGER (0..5119),
            timeDomainAllocation            INTEGER  (0..15),
            frequencyDomainAllocation       BIT STRING (SIZE(18)),
            antennaPort                     INTEGER (0..31),
            dmrs-SeqInitialization          INTEGER (0..1)
OPTIONAL,    -- Need R
```

```
            precodingAndNumberOfLayers          INTEGER (0..63),
            srs-ResourceIndicator               INTEGER (0..15)
OPTIONAL,    -- Need R
            mcsAndTBS                           INTEGER (0..31),
            frequencyHoppingOffset              INTEGER (1..
        maxNrofPhysicalResourceBlocks-1)
OPTIONAL,    -- Need R
            pathlossReferenceIndex              INTEGER (0..maxNrofPUSCH-
        PathlossReferenceRSs-1),
                ...
        }
OPTIONAL,    -- Need R
        ...
    }
```

A PUSCH transmission method will now be described. A DMRS antenna port for PUSCH transmission is equal to an antenna port for SRS transmission. PUSCH transmission may follow a codebook based transmission method or a non-codebook based transmission method depending on whether a value of txConfig in higher layer signaling pusch-Config of Table 19 is 'codebook' or 'nonCodebook'.

As described above, PUSCH transmission may be dynamically scheduled by DCI format 0_0 or 0_1, or quasi-statically configured by the configured grant. When the UE receives an indication of scheduling of PUSCH transmission by DCI format 0_0, the UE performs beam configuration for PUSCH transmission by using pucch-spatialRelationInfoID corresponding to a UE-specific PUCCH resource corresponding to a smallest ID in an activated UL BWP in the serving cell, in which case the PUSCH transmission is based on a single antenna port. The UE does not expect scheduling for the PUSCH transmission by DCI format 0_0 in a BWP in which a PUCCH resource including pucch-spatialRelationInfo is not configured. When the UE is not configured with txConfig in the pusch-Config of Table 19, the UE does not expect to be scheduled in DCI format 0_1.

[Table 19]

```
PUSCH-Config ::=                                SEQUENCE {
            dataScramblingIdentityPUSCH         INTEGER (0..1023)
OPTIONAL,      -- Need S
            txConfig                            ENUMERATED {codebook, nonCodebook}
OPTIONAL,      -- Need S
            dmrs-UplinkForPUSCH-MappingTypeA    SetupRelease { DMRS-UplinkConfig }
OPTIONAL,      -- Need M
            dmrs-UplinkForPUSCH-MappingTypeB    SetupRelease { DMRS-UplinkConfig }
OPTIONAL,      -- Need M


            pusch-PowerControl                  PUSCH-PowerControl
OPTIONAL,      -- Need M
            frequencyHopping                    ENUMERATED {intraSlot, interSlot}
OPTIONAL,      -- Need S
            frequencyHoppingOffsetLists         SEQUENCE (SIZE (1..4)) OF INTEGER (1..
            maxNrofPhysicalResourceBlocks-1)


OPTIONAL,      -- Need M
            resourceAllocation                  ENUMERATED { resourceAllocationType0,
            resourceAllocationType1, dynamicSwitch},
            pusch-TimeDomainAllocationList      SetupRelease { PUSCH-
            TimeDomainResourceAllocationList }
OPTIONAL,      -- Need M
            pusch-AggregationFactor             ENUMERATED { n2, n4, n8 }
OPTIONAL,      -- Need S
            mcs-Table                           ENUMERATED {qam256, qam64LowSE}
OPTIONAL,      -- Need S
            mcs-TableTransformPrecoder          ENUMERATED {qam256, qam64LowSE}
OPTIONAL,      -- Need S
            transformPrecoder                   ENUMERATED {enabled, disabled}
OPTIONAL,      -- Need S
            codebookSubset                      ENUMERATED {fullyAndPartialAndNonCoherent,
            partialAndNonCoherent,nonCoherent}


OPTIONAL, -- Cond codebookBased
            maxRank                             INTEGER (1..4)
OPTIONAL, -- Cond codebookBased
            rbg-Size                            ENUMERATED { config2}
OPTIONAL, -- Need S
            uci-OnPUSCH                         SetupRelease { UCI-OnPUSCH}
OPTIONAL, -- Need M
            tp-pi2BPSK                          ENUMERATED {enabled}
OPTIONAL, -- Need S

            ...
}
```

Codebook based PUSCH transmission will now be described. Codebook based PUSCH transmission may be dynamically scheduled by DCI format 0_0 or 0_1, or quasi-statically operated by the configured grant. When the codebook based PUSCH transmission is dynamically scheduled by DCI format 0_1 or quasi-statically configured by the configured grant, the UE determines a precoder for PUSCH transmission based on an SRS resource indicator (SRI), a transmission precoding matrix indicator (TPMI), and a transmission rank (the number of PUSCH transmission layers).

The SRI may be given by a field in DCI, SRS resource indicator, or configured by higher layer signaling srs-ResourceIndicator. The UE may be configured with at least one and up to two SRS resources for codebook based PUSCH transmission. When the UE receives the SRI in DCI, an SRS resource indicated by the SRI refers to an SRS resource corresponding to the SRI among SRS resources transmitted before the PDCCH including the SRI. Furthermore, the TPMI and the transmission rank may be given by a field in the DCI, 'precoding information and number of layers', or configured by higher layer signaling precodingAndNumberOfLayers. The TPMI is used to indicate a precoder to be applied for PUSCH transmission. When the UE is configured with one SRS resource, the TPMI is used to indicate a precoder to be applied in the configured one SRS resource. When the UE is configured with a plurality of SRS resources, the TPMI is used to indicate a precoder to be applied in the SRS resource indicated by the SRI.

The precoder to be used for PUSCH transmission is selected from a UL codebook having the same number of antenna ports as a value of nrofSRS-Ports in higher layer signaling SRS-Config. In the codebook based PUSCH transmission, the UE determines a codebook subset based on the TPMI and codebookSubset in higher layer signaling pusch-Config. The codebookSubset in the higher layer signaling pusch-Config may be configured as one of 'fullyAndPartialAndNonCoherent', 'partialAndNonCoherent', and 'nonCoherent' based on the UE capability reported by the UE to the BS. When the UE reports 'partialAndNonCoherent' in the UE capability, the UE does not expect that higher layer signaling codebookSubset is configured to have a value of 'fullyAndPartialAndNonCoherent'. When the UE reports 'nonCoherent' in the UE capability, the UE does not expect that higher layer signaling codebookSubset is configured to have a value of 'fullyAndPartialAndNonCoherent' or 'partialAndNonCoherent'. When nrofSRS-Ports in higher layer signaling SRS-ResourceSet indicates two SRS antenna ports, the UE does not expect that higher layer signaling codebookSubset is configured to have a value of 'partialAndNonCoherent'.

The UE may be configured with one SRS resource set with a value of the usage in higher layer signaling SRS-ResourceSet set to 'codebook', and one SRS resource in the SRS resource set may be indicated by the SRI. When several SRS resources in the SRS resource set with a value of the usage in higher layer signaling SRS-ResourceSet set to 'codebook' are configured, the UE expects that nrofSRS-Ports in higher layer signaling SRS-Resource is configured to have the same value for all SRS resources.

The UE transmits, to the BS, one or multiple SRS resources included in the SRS resource set with a value of the usage set to 'codebook' by higher layer signaling, and the BS selects one of the SRS resources transmitted from the UE and indicates that the UE is allowed to perform PUSCH transmission using transmit beam information of the SRS resource. In this case, for the codebook based PUSCH transmission, the SRI is used as information for selecting an index of the one SRS resource and is included in DCI. Additionally, the BS may add information indicating a TPMI and a rank to be used by the UE for PUSCH transmission to the DCI. The UE uses the SRS resource indicated by the SRI to perform PUSCH transmission by applying the precoder indicated by the rank and the TPMI indicated based on the transmit beam of the SRS resource.

Non-codebook based PUSCH transmission will now be described. Non-codebook based PUSCH transmission may be dynamically scheduled by DCI format 0_0 or 0_1, or quasi-statically operated by the configured grant. When at least one SRS resource in an SRS resource set with a value of the usage in higher layer signaling SRS-ResourceSet set to 'nonCodebook' is configured, the UE may be scheduled for non-codebook based PUSCH transmission by DCI format 0_1.

For the SRS resource set with a value of the usage in higher layer signaling SRS-ResourceSet set to 'nonCodebook', the UE may be configured with one associated non-zero power CSI-RS (NZP CSI-RS) resource. The UE may perform calculation on a precoder for SRS transmission by measuring the NZP CSI-RS resource associated with the SRS resource set. When a gap between the last reception symbol of an aperiodic NZP CSI-RS resource associated with the SRS resource set and the first symbol of aperiodic SRS transmission from the UE is less than 42 symbols, the UE does not expect updating of information about the precoder for SRS transmission.

When a value of resourceType in higher layer signaling SRS-ResourceSet is set to 'aperiodic', an associated NZP CSI-RS is indicated in the field SRS request in DCI format 0_1 or 1_1. In this case, when the associated NZP CSI-RS resource is an aperiodic NZP CSI-RS resource, it indicates that there is an NZP CSI-RS associated for an occasion when the value of the field SRS request in DCI format 0_1 or 1_1 is not '00'. In this case, the DCI is prevented from indicating cross carrier or cross BWP scheduling. Furthermore, when the value of the SRS request indicates the presence of an NZP CSI-RS, the NZP CSI-RS is located in a slot in which a PDCCH including the SRS request field is transmitted. In this case, TCI states configured for a scheduled subcarrier are not set to QCL-TypeD.

When a periodic or semi-persistent SRS resource set is configured, an associated NZP CSI-RS may be indicated by associatedCSI-RS in higher layer signaling SRS-ResourceSet. For non-codebook based transmission, the UE does not expect both the higher layer signaling spatialRelationInfo for an SRS resource and associatedCSI-RS in the higher layer signaling SRS-ResourceSet to be configured.

When configured with a plurality of SRS resources, the UE may determine a precoder and a transmission rank to be applied for PUSCH transmission based on the SRI indicated by the BS. In this case, the SRI may be indicated by a field in DCI, SRS resource indicator, or configured by higher layer signaling srs-ResourceIndicator. Similar to the aforementioned codebook based PUSCH transmission, when the UE receives the SRI in DCI, an SRS resource indicated by the SRI refers to an SRS resource corresponding to the SRI among SRS resources transmitted before the PDCCH including the SRI. The UE may use one or more SRS resources for SRS transmission, and the maximum number of SRS resources available for simultaneous transmission in the same symbol in one SRS resource set and the maximum number of SRS resources are determined by UE capability reported by the UE to the BS. In this case, the SRS resources transmitted simultaneously by the UE occupy the same RB. The UE configures one SRS port for each SRS resource. Only one SRS resource set with a value of the usage in the higher layer signaling SRS-ResourceSet set to 'nonCodebook' may be configured, and it is possible to configure up to four SRS resources for non-codebook based PUSCH transmission.

The BS transmits one NZP-CSI-RS associated with the SRS resource set to the UE, and the UE calculates a precoder to be used for transmission of one or more SRS resources in the SRS resource set based on a result of measurement during the NZP_CSI-RS reception. The UE may apply the precoder calculated to transmit one or more SRS resources in the SRS resource set with the usage set to 'nonCodebook' to the BS, and the BS selects one or more of the received SRS resources. In this case, for the non-codebook based PUSCH transmission, the SRI indicates an index that may represent a combination of one or more SRS resources, and the SRI is included in DCI. The number of SRS resources indicated by the SRI transmitted from the BS may be the number of transmission layers of the PUSCH, and the UE transmits the PUSCH by applying the precoder applied for SRS resource transmission for each layer.

[PUSCH: preparation procedure time]

A PUSCH preparation procedure time will now be described. When the BS schedules the UE to transmit a PUSCH with DCI format 0_0, 0_1 or 0-2, the UE may need a PUSCH preparation procedure time to transmit the PUSCH by applying a transmission method (an SRS resource transmission precoding method, the number of transmission layers, or a spatial domain transmission filter) indicated by DCI. Taking this into account, NR has defined a PUSCH preparation procedure time. The PUSCH preparation procedure time of the UE may follow Equation 2 below:

【Equation 2】

$$T_{proc,2} = \max((N_2 + d_{2,1} + d_2)(2048 + 144)\,\kappa * 2^{-\mu} T_c + T_{ext} + T_{switch},\ d_{2,2})$$

Variables in $T_{proc,2}$ expressed in Equation 2 may have the following meanings:
- $N_2$: the number of symbols determined according to UE processing capability 1 or 2 of UE capability and numerology $\mu$. It may have a value in Table 20 when the UE capability 1 is reported in a UE capability report, and a value in Table 21 when the UE capability 2 is reported in the UE capability report and the UE capability 2 is configured as being available by higher layer signaling.

[Table 20]

| $\mu$ | PUSCH preparation time $N_2$ [symbols] |
|---|---|
| 0 | 10 |
| 1 | 12 |
| 2 | 23 |
| 3 | 36 |

[Table 21]

| $\mu$ | PUSCH preparation time $N_2$ [symbols] |
|---|---|
| 0 | 5 |
| 1 | 5.5 |
| 2 | 11 for frequency range 1 |

- $d_{2,1}$: the number of symbols determined to be 0 when resource elements of the first OFDM symbol are all configured to be comprised of DMRSs, or 1 otherwise.
- $\kappa$: 64
- $\mu$: among $\mu_{DL}$ or $\mu_{UL}$, follows a value with $T_{proc,2}$ being larger. $\mu_{DL}$ refers to numerology of a DL in which a PDCCH including DCI that schedules the PUSCH is transmitted, and $\mu_{UL}$ refers to numerology of a UL in which the PUSCH is transmitted.

$$T_c:\ 1/(\Delta f_{max} * N_f),\ \Delta f_{max} = 480 * 10^3 Hz,\ N_f = 4096$$

- $d_{2,2}$: follows a BWP switching time when the DCI scheduling the PUSCH indicates BWP switching, or has '0' otherwise.

- $d_2$: when OFDM symbols of a PUCCH, a PUSCH with a high priority index and a PUCCH with a low priority index overlap in time, $d_2$ of the PUSCH with the high priority index may be used. Otherwise, $d_2$ is 0.

- $T_{ext}$: when the UE uses a shared spectrum channel access scheme, the UE calculates $T_{ext}$ to be applied to the PUSCH preparation procedure time. Otherwise, $T_{ext}$ is assumed to be 0.

- $T_{switch}$: $T_{switch}$ is assumed as a switching interval time when a UL switching interval is triggered. Otherwise, $T_{switch}$ is assumed to be 0.

The BS and the UE determine that the PUSCH preparation procedure time is not sufficient when the first symbol of the PUSCH starts earlier than the first UL symbol in which CP starts after $T_{proc,2}$ from the last symbol of a PDCCH including the DCI that schedules the PUSCH, in consideration of time domain resource mapping information of the PUSCH scheduled by the DCI and an influence of timing advance between the UL and the DL. Otherwise, the BS and the UE determine that the PUSCH preparation procedure time is sufficient. The UE may transmit the PUSCH only when the PUSCH preparation procedure time is sufficient, and may ignore the DCI that schedules the PUSCH when the PUSCH preparation procedure time is not sufficient.

[PUSCH: repetitive transmission]

UL data channel repetitive transmissions in the 5G system will now be described in detail. The 5G system supports two types of UL data channel repetitive transmission methods, i.e., PUSCH repetitive transmission type A and PUSCH repetitive transmission type B. The UE may be configured with one of the PUSCH repetitive transmission type A or B by higher layer signaling.

PUSCH repetitive transmission type A (PUSCH repetition type A)

- as described above, symbol length and a start symbol position of a UL data channel may be determined in a time domain resource allocation method in one slot, and the BS may notify the UE of the number of repetitive transmissions by higher layer signaling (e.g., RRC signaling) or L1 signaling (e.g., DCI).

- the UE may repetitively transmit the same UL data channel in successive slots of a repetitive transmission section identified based on the UL data channel length set based on the start symbol and the number of repetitive transmissions. In this case, when there is a slot configured by the BS for the UE in a DL or at least one of symbols of a UL data channel configured for the UE set to DL in the repetitive transmission section, the UE skips UL data channel transmission in the slot or symbol but counts the number of repetitive transmissions of the UL data channel.

PUSCH repetitive transmission type B (PUSCH repetition type B)

- as described above, a start symbol and length of a UL data channel may be determined in a time domain resource allocation method in one slot, and the BS may notify the UE of the number of repetitive transmissions, numberofrepetitions, by higher layer signaling (e.g., RRC signaling) or L1 signaling (e.g., DCI).

- based on the start symbol and length of the UL data channel configured earlier, nominal repetition of the UL data channel is determined as follows: A slot in which n-th nominal repetition starts is given by $K_s + \left\lfloor \dfrac{S + n \cdot L}{N_{symb}^{slot}} \right\rfloor$ , and a start symbol in the slot is given by $\mathrm{mod}\left( S + n \cdot L, N_{symb}^{slot} \right)$ . A slot in which n-th nominal repetition ends is given by $K_s + \left\lfloor \dfrac{S + (n+1) \cdot L - 1}{N_{symb}^{slot}} \right\rfloor$ , and an end symbol in the slot is given by $\mathrm{mod}\left( S + (n+1) \cdot L - 1, N_{symb}^{slot} \right)$ . Here, n=0, ..., numberofrepetitions-1, S denotes a start symbol of the configured UL data channel, and L denotes symbol length of the configured UL data channel. $K_s$ denotes a slot in which the PUSCH transmission starts, and $N_{symb}^{slot}$ denotes the number of symbols per slot.

- the UE may determine a particular OFDM symbol as an invalid symbol for the PUSCH repetitive transmission type B in the following cases:

1. A symbol set to DL by tdd-UL-DL-ConfigurationCommon or tdd-UL-DL-ConfigurationDedicated may be determined as an invalid symbol for the PUSCH repetitive transmission type B.

2. Symbols indicated by ssb-PositionBurst in SIB1 or ssb-PositionInBurst in higher layer signaling ServingCell-ConfigCommon for SSB reception in unpaired spectrum (TDD spectrum) may be determined as invalid symbols for the PUSCH repetitive transmission type B.

3. Symbols indicated by pdcch-ConfigSIB1 in an MIB for transmitting a control resource set connected to Type0-PDCCH CSS set in the unpaired spectrum (TDD spectrum) may be determined as invalid symbols for the PUSCH repetitive transmission type B.

4. In the unpaired spectrum (TDD spectrum), when the higher layer signaling numberOfInvalidSymbolsForDL-UL-Switching is configured, as many symbols as numberOfInvalidSymbolsForDL-UL-Switching from symbols set to DL by tdd-UL-DL-ConfigurationCommon or tdd-UL-DL-ConfigurationDedicated may be determined as invalid symbols.

- additionally, the invalid symbol may be configured in a higher layer parameter (e.g., InvalidSymbolPattern). The higher layer parameter (e.g., InvalidSymbolPattern) may provide a symbol-level bitmap spanning one or two slots to configure invalid symbols. In the bitmap, '1' represents an invalid symbol. In addition, periodicity and a pattern of the bitmap may be configured in a higher layer parameter (e.g., periodicityAndPattern). When the higher layer parameter (e.g., InvalidSymbolPattern) is configured and parameter InvalidSymbolPatternindicator-ForDCIFormat0_1 or InvalidSymbolPatternIndicator-ForDCIFormat0_2 indicates '1', the UE applies an invalid symbol pattern, and when the parameter indicates '0', the UE does not apply the invalid symbol pattern. When the higher layer parameter (e.g., InvalidSymbolPattern) is configured and the parameter InvalidSymbolPatternIndicator-ForDCIFormat0_1 or InvalidSymbolPatternIndicator-ForDCIFormat0_2 is not configured, the UE applies the invalid symbol pattern.

After the invalid symbol is determined, the UE may consider symbols other than the invalid symbol as valid symbols for each nominal repetition. When one or more valid symbols are included in each nominal repetition, the nominal repetition may include one or more actual repetitions. Each of the actual repetitions includes a set of successive valid symbols to be used for the PUSCH repetitive transmission type B in one slot. In a case that the OFDM symbol length of the nominal repetition is not one, when the length of an actual repetition is one, the UE may ignore transmission of the actual repetition.

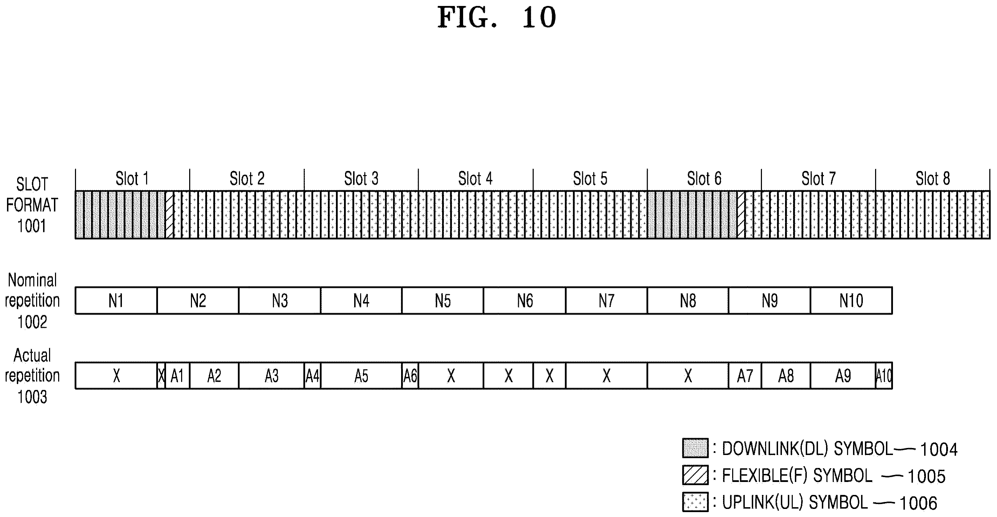

FIG. 10 illustrates an example of PUSCH repetition type B, according to an embodiment of the disclosure.

In FIG. 10, for nominal repetition of the UE, illustrated is an occasion when the transmission start symbol S is set to 0, the transmission symbol length L is set to 10 and the number of repetitive transmissions is set to 10, which may be represented with N1 to N10 (1002). In this case, by determining invalid symbols with consideration for a slot format 1001, actual repetition may be determined, which may be represented with A1 to A10 (1003). In this case, according to the invalid symbols and actual repetition determination method, the PUSCH repetition type B is not transmitted in the symbols determined as DL in the slot format, and when there is a slot boundary in the nominal repetition, the nominal repetition may be divided based on the slot boundary into two actual repetitions for transmission. For example, A1 that refers to the first actual repetition may be comprised of three OFDM symbols, and A2 that may be transmitted next may be comprised of six OFDM symbols.

Moreover, for PUSCH repetitive transmission, the NR release 16 may define periodic methods for UL-grant based PUSCH transmission and configured-grant based PUSCH transmission that cross the slot boundary as follows:

- method 1 (mini-slot repetition): two or more PUSCH repetitive transmissions within one slot or across a boundary between successive slots are scheduled through one UL grant. For the method 1, time domain resource allocation information in DCI indicates a resource for the first repetitive transmission. Furthermore, time domain resource information of the remaining repetitive transmissions may be determined according to the time domain resource information of the first repetitive transmission and the UL or DL direction determined for each symbol of each slot. Each repetitive transmission occupies successive symbols.

- method 2 (multi-segment transmission): two or more PUSCH repetitive transmissions in successive slots are scheduled through one UL grant. In this case, one transmission for each slot is designated, and each transmission may have a different start point or repetition length. In the method 2, time domain resource allocation information in DCI indicates start points and repetition lengths of all the repetitive transmissions. Furthermore, in a case that repetitive transmissions are performed within a single slot according to the method 2, when there are several groups of successive UL symbols within the slot, each repetitive transmission is performed for each of the UL symbol groups. When there is only one group of successive UL symbols within the slot, one PUSCH repetitive transmission is performed according to the method of NR release 15.

- method 3: two or more PUSCH repetitive transmissions in successive slots are scheduled through two or more UL grants. In this case, one transmission is designated for each slot, and the n-th UL grant may be received before the PUSCH transmission scheduled by the (n-1)-th UL grant is completed.

- method 4: Through one UL grant or one configured grant, one or more PUSCH repetitive transmissions within a single slot or two or more PUSCH repetitive transmissions across successive slots may be supported. The number of repetitions indicated by the BS to the UE is a nominal value, and the actual number of PUSCH repetitions performed by the UE may be larger than the nominal number of repetitions. Time domain resource allocation information in DCI or configured grant refers to a resource of the first repetitive transmission indicated by the BS. The time domain resource information of the rest of repetitive transmissions may be determined by referring to at least the resource information of the first repetitive transmission and the UL or DL direction of the symbols. When the time domain resource information of the repetitive transmission indicated by the BS lies across slots or includes a UL/DL transition point, the repetitive transmission may be divided into multiple repetitive transmissions. In this case, one repetitive transmission may be included in each UL period within one slot.

[PUSCH: frequency hopping operation]

Regarding frequency hopping, the BS may configure the UE with a frequency hopping related parameters through higher layer signaling. Frequency hopping may be classified into intra-slot frequency hopping for PUSCH transmission in a single slot or across multiple slots, or inter-slot frequency hopping for PUSCH transmission across multiple slots. The frequency hopping may be configured and/or indicated in the following conditions.

For PUSCH transmission on a type 1 configured UL grant basis, a frequency offset may be set through higher layer signaling (e.g., RRC).

In the case of intra-slot frequency hopping, a start hopping position on the frequency domain in a slot may be determined by Equation 3 below:

【Equation 3】

$$RB_{\text{start}} = \begin{cases} RB_{start}, & i = 0 \\ (RB_{start} + RB_{offset}) mod N_{BWP}^{size}, & i = 1 \end{cases}$$

where i=0 and i=1 refer to a first hop and a second hop, respectively. RB_start denotes a start RB in an UL BWP, which may be computed from RB allocation information of resource allocation type 1. RB_offset denotes a frequency offset between the first hop and the second hop. Along with this, the number of symbols of the first hop may be determined to be $\left\lfloor N_{symb}^{PUSCH,s}/2 \right\rfloor$ and the number of symbols of the second hop may be determined to be $N_{symb}^{PUSCH,s} - \left\lfloor N_{symb}^{PUSCH,s}/2 \right\rfloor$, where $N_{symb}^{PUSCH,s}$ denotes symbol length for PUSCH transmission in one slot.

In the case of inter-slot frequency hopping, a start hopping position on the frequency domain in the $n_s^{\mu}$-th slot may be determined by Equation 4 below:

【Equation 4】

$$RB_{\text{start}}(n_s^{\mu}) = \begin{cases} RB_{start}, & n_s^{\mu} mod 2 = 0 \\ (RB_{start} + RB_{offset}) mod N_{BWP}^{size}, & n_s^{\mu} mod 2 = 1 \end{cases}$$

where $n_s^{\mu}$ denotes a slot number allowing PUSCH transmission across multiple slots in a radio frame.

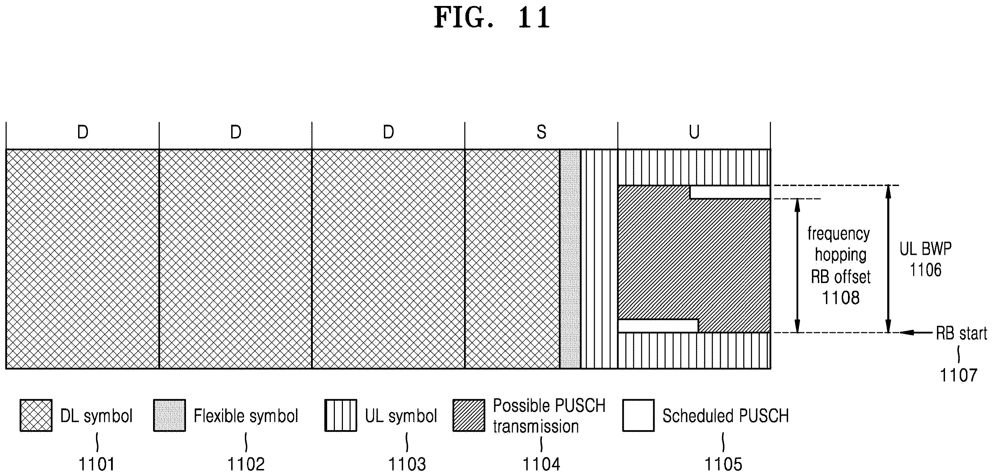

FIG. 11 illustrates an example of PUSCH frequency hopping, according to an embodiment of the disclosure.

In FIG. 11, according to a TDD DL-UL configuration, the PUSCH may be transmitted in a UL symbol region 1103. In this case, PUSCH transmission may be performed in 1104 in an activated UL BWP 1106. The UE may determine a transmission location based on a start point, RB start 1107, and an RB offset 1108, a parameter related to the frequency hopping on the frequency domain of the UL BWP configured through higher layer signaling (e.g., RRC). Furthermore, the UE may be configured with whether it is intra-slot or inter-slot through higher layer signaling. For example, when the frequency hopping configuration configured for the UE through higher layer signaling is the intra-slot frequency hopping, the UE may determine a frequency hopping start position 1105 based on Equation 3.

[SBFD: summary of SBFD]

In the meantime, in the 3GPP, subband non-overlapping full duplex (SBFD) is being discussed as a new duplex scheme on an NR basis. The SBFD is a technology that may expand UL coverage of the UE by using part of a DL resource as a UL resource in the TDD spectrum of sub-6 GHz or above-6 GHz frequencies so that the BS receives UL transmissions from the UE in the expanded UL resource, and that may reduce feedback delay by receiving, from the UE, feedback for a DL transmission in the expanded UL resource. In the disclosure, a UE that may receive information about whether the SBFD is supported from the BS and perform UL transmission in part of a DL resource is referred to as an SBFD-capable UE. To define the SBFD scheme in a standard and in order for the SBFD-capable UE to determine that the SBFD is supported in a certain cell (or frequency or frequency band), the following methods may be considered.

In the first method, in addition to the frame structure type of the existing unpaired spectrum (or time division duplex (TDD)) or paired spectrum (or frequency division duplex (FDD)), another frame structure type (e.g., frame structure type 2) may be introduced to define the SBFD. The frame structure type 2 may be defined as being supported at the certain frequency or in a certain frequency band, or whether the SBFD is supported may be indicated by the BS to the UE in system information. The SBFD-capable UE may determine whether the SBFD is supported in the certain cell (or frequency or frequency band) by receiving the system information including whether the SBFD is supported.

In the second method, whether the SBFD is additionally supported at a certain frequency or in a certain frequency band of the existing unpaired spectrum (or TDD) may be indicated without defining a new frame structure type. In the second method, whether the SBFD is additionally supported at a certain frequency or in a certain frequency band of the existing unpaired spectrum may be defined, or whether the SBFD is supported may be indicated by the BS to the UE in system information. The SBFD-capable UE may determine whether the SBFD is supported in the certain cell (or frequency or frequency band) by receiving the system information including whether the SBFD is supported.

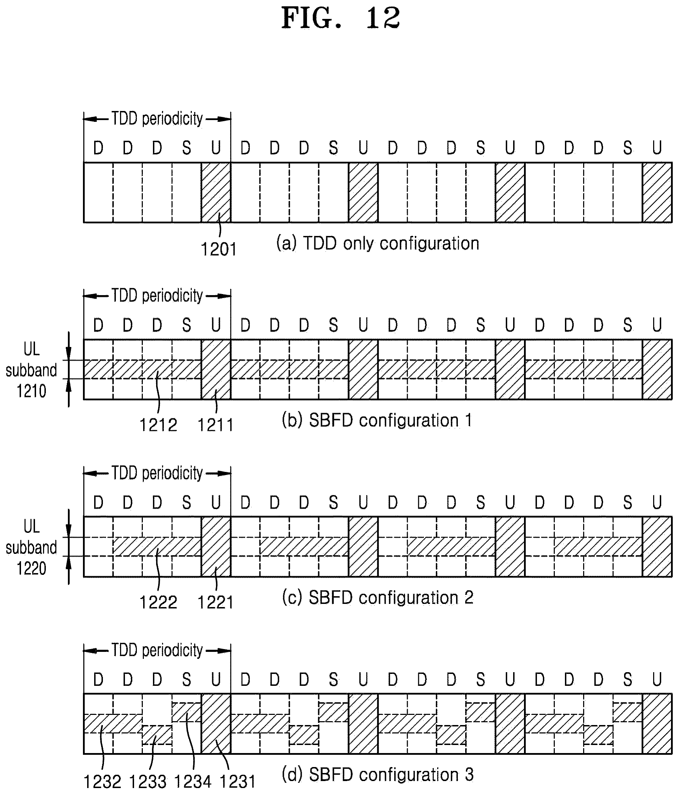

In the first and second methods, information about whether the SBFD is supported may indirectly indicate whether the SBFD is supported (e.g., SBFD resource configuration information as will be described later in connection with FIG. 12) by additionally configuring part of a DL resource as a UL resource in addition to configuring TDD UL-DL resource configuration information indicating DL slot (or symbol) resources and UL slot (or symbol) resources of TDD, or directly indicate whether the SBFD is supported.

FIG. 12 is a diagram for describing SBFD resource configuration information of the disclosure.

As described above, the SBFD resource configuration information may indirectly indicate whether the SBFD is supported by additionally configuring part of a DL resource as a UL resource (in (b) to (d) of FIG. 12) in addition to configuring TDD UL-DL resource configuration information that indicates TDD DL slot resources and UL slot resources. The UE may transmit a UL shared channel or control channel in the configured UL resource.

In the disclosure, the SBFD-capable UE may obtain a cell sync by receiving a sync signal block in initial cell access to connect to a cell (or BS). A process of obtaining the cell sync may be the same in the SBFD-capable UE and the existing TDD UE. Afterward, the SBFD-capable UE may determine whether the cell supports the SBFD through a process of obtaining an MIB or an SIB or through a random access procedure.

The system information for transmitting information about whether the SBFD is supported may be transmitted separately from system information for a UE that supports a standard of another version in the cell (e.g., the existing TDD UE), and the SBFD-capable UE may determine whether the SBFD is supported by obtaining all or part of the system information transmitted separately from the system information for the existing TDD UE. When obtaining only the system information for the existing TDD UE or system information indicating that the SBFD is not supported, the SBFD-capable UE may determine that the cell (or BS) supports TDD only.

When the information about whether the SBFD is supported is included in the system information for the UE that supports the standard of another version (e.g., the existing TDD UE), the information about whether the SBFD is supported may be inserted to the last portion not to affect the existing TDD UE in obtaining the system information. When the SBFD-capable UE fails to obtain the information about whether the SBFD is supported inserted to the last portion or obtains information indicating that the SBFD is not supported, the SBFD-capable UE may determine that the cell (or BS) supports TDD only.

When the information about whether the SBFD is supported is included in the system information for the UE that supports the standard of another version (e.g., the existing TDD UE), the information about whether the SBFD is supported may be transmitted in a separate PDSCH not to affect the existing TDD UE in obtaining the system information. Specifically, an SBFD-incapable UE may receive a first SIB (or SIB1) including existing TDD related system information in a first PDSCH. The SBFD-capable UE may receive the first SIB (or SIB1) including the existing TDD related system information in the first PDSCH, and receive a second SIB (or SIB2) including SBFD related system information in a second PDSCH. The first PDSCH and the second PDSCH may be scheduled in a first PDCCH and a second PDCCH, and cyclic redundancy codes (CRCs) of the first PDCCH and the second PDCCH may be scrambled by the same RNTI (e.g., an SI-RNTI). Control resource information (for example, search space and/or coreset information) for monitoring the second PDCCH may be obtained from system information in the first PDSCH, but when it is not obtained (i.e., when the system information of the first PDSCH does not include information about the search space), the SBFD-capable UE may receive the second PDCCH in the same search space as the search space of the first PDCCH.

As such, when the SBFD-capable UE determines that the cell (or BS) supports TDD only, the SBFD-capable UE may perform the same random access procedure and transmission or reception of data/control signals as in the existing TDD UE.

The BS may configure a separate random access resource for each of the existing TDD UE or the SBFD-capable UE (e.g., an SBFD-capable UE that supports duplex communication and an SBFD-capable UE that supports half-duplex communication), and transmit configuration information for the random access resource (control information or configuration information indicating time-frequency resources to be used for the PRACH) to the SBFD-capable UE through system information. The system information for transmitting information about the random access resource may be differentiated from system information for a UE that supports a standard of another version in the cell (e.g., the existing TDD UE) and transmitted separately.

The BS is able to differentiate whether the TDD UE that supports the standard of another version performs the random access or the SBFD UE performs the random access by configuring separate random access resources for the TDD UE that supports the standard of another version and the SBFD terminal. For example, a separate random access resource configured for the SBFD-capable UE may be a resource may be determined by the existing TDD UE as a DL time resource, and the SBFD-capable UE may perform random access in a UL resource (or a separate random access resource) configured for some frequencies of the DL time resource so that the BS may determine that the UE having tried the random access in the UL resource is the SBFD-capable UE.

Alternatively, the BS may not configure a separate random access resource for the SBFD-capable UE but configure a common random access resource for all UEs in the cell. In this case, configuration information for the random access resource may be transmitted to all the UEs in the cell in system information, and the SBFD-capable UE that has received the system information may perform random access by using the random access resource. Afterward, the SBFD-capable UE may complete the random access procedure and proceed into an RRC access mode for transmitting or receiving data to or from the cell. Since the RRC access mode, the SBFD-capable UE may receive, from the BS, a higher or physical signal from which some frequency resources of the DL time resource may be determined as being configured as UL resources, and may perform an SBFD operation, e.g., transmit a UL signal in the configured UL resource.

When the SBFD-capable UE determines that the cell supports the SBFD, the SBFD-capable UE may notify the BS that the UE trying the access is the SBFD-capable UE by transmitting, to the BS, capability information including at least one piece of information about whether the UE supports the SBFD, whether full-duplex communication or half-duplex communication is supported or the number of transmit or receive antennas. When it is mandatory that the SBFD-capable UE supports half-duplex communication, whether the half-duplex communication is supported may not be included in the capability information. The SBFD-capable UE may report the capability information to the BS in the random access procedure, after completion of the random access procedure, or after proceeding into the RRC access mode for transmitting or receiving data to or from the cell.

The SBFD UE may support half-duplex communication for performing only UL transmission or DL reception at a time as in the existing TDD UE, or support full-duplex communication for simultaneously performing both the UL transmission or the DL reception. Hence, whether the half-duplex communication or the full-duplex communication is supported may be reported by the SBFD-capable UE to the BS through the capability report, and after the report, the BS may configure the SBFD-capable UE with whether the SBFD-capable UE may transmit or receive signals to the BS based on the half-duplex communication or the full-duplex communication. In a case that the SBFD-capable UE reports the BS of the capability about the half-duplex communication, when operation is performed in FDD or TDD as there exists no duplexer in general, a switching gap may be required to change RFs between transmission and reception.

In general, the UE may establish a radio link with the network through a random access procedure based on system information and synchronization with the network obtained in a cell search procedure of the cell. Random access may be used in a contention-based method or a contention-free method. The contention-based random access method may be used when the UE performs cell selection and re-selection in an initial cell access step (e.g., the UE goes into an RRC_CONNECTED (RRC connected) state from an RRC_IDLE (RRC_idle) state). The contention-free random access may be used to re-establish UL synchronization in case of DL data arrival, handover, or location measurement.

A hopping operation of the PUSCH transmission UE in the frequency domain may be determined based on a UL BWP configured by the BS. In the meantime, unlike the existing system (e.g., a TDD system) environment, PUSCH transmission in an SBFD system environment where a UL subband is applied to a DL region may correspond to the UL subband or the same UL-dedicated slot/symbol as in the TDD system. In this context, when the UE follows a method defined for the TDD system to determine a PUSCH frequency hopping position on the frequency domain in the SBFD environment (i.e., determines a PUSCH transmission position based on a DL BWP), PUSCH transmission is enabled only in the UL-dedicated symbol/slot. Alternatively, when the configuration is made to match the UL subband frequency resource according to the method defined for the TDD system, there may be less opportunity to experience various channels and enhance channel prediction performance.

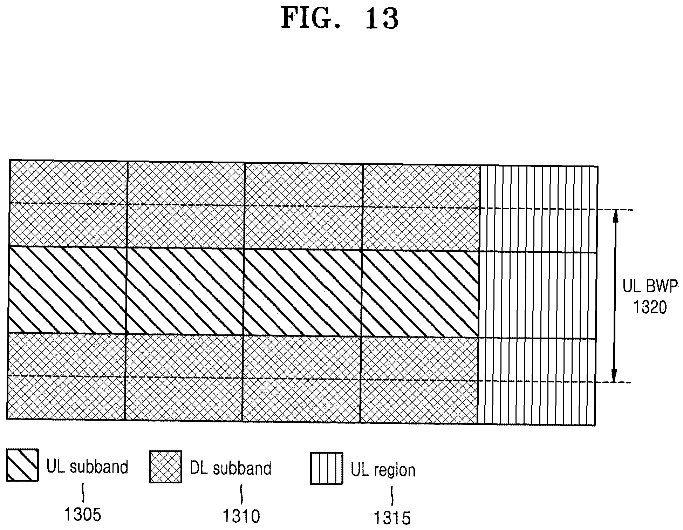

FIG. 13 illustrates an SBFD configuration, according to an embodiment. In the following embodiment, described is an SBFD environment. In this case, a UL subband 1305 may refer to a subband region located in a frequency band that is not overlapped with a DL subband 1310 at the same time. Furthermore, a UL region 1315 may refer to a region where there is only UL transmission without DL transmission at the same time, and may be referred to as a UL only region, a UL region, a UL only symbol or a UL only slot. Moreover, a UL BWP 1320 may be an initial UL BWP configured from an SIB1 in the initial access stage, which may be a UE-dedicated BWP configured through higher layer signaling in RRC_CONNECTED stage. In the following embodiment, descriptions of the related terms will be omitted.

In an embodiment of the disclosure, provided are various methods of configuring resources for UL data channel transmission in time and frequency resources, and provided is a method of determining a UL data channel transmission position in certain UL an DL transmission and reception resource patterns.

Hereinafter, the term higher layer signaling may be one of the following signalings or may correspond to one or more combinations of the following signalings:

- Master information block (MIB)
- System information block (SIB) or SIB X (X=1, 2, ...)
- Radio resource control (RRC)
- Medium access control (MAC) control element (CE)
- UE capability reporting
- UE assistance information message

Furthermore, L1 signaling may be one of the following physical layer channel or signaling methods, or may correspond to one or more combinations of the following physical layer channel or signaling methods:

- Physical downlink control channel (PDCCH)
- Downlink control information (DCI)
- UE-specific DCI
- group-common DCI
- common DCI
- scheduling DCI (e.g., DCI used for the purpose of scheduling DL or UL data)
- non-scheduling DCI (e.g., DCI used not for scheduling DL or UL data)
- PUCCH
- Uplink control information (UCI)

<RB index definitions in SBFD system>

In the disclosure, one of the following three indexes may be used as an RB index.

1) common RB index

The common RB index is numbered from 0, increasing with an increase in frequency. A subcarrier that matches point A is called subcarrier 0, and twelve subcarriers from the subcarrier are grouped in ascending order of frequencies and assigned a common RB index. Specifically, when the subcarrier index is k, a maximum integer that does not exceed a value of k/12, i.e., floor(k/12), is the common RB index of an RB to which the subcarrier belongs.

The common RB index is determined according to the point A. As the point A is commonly configured for all UEs in the cell, and all the UEs may have the same common RB index.

2) BWP-specific RB index

The UE may be configured with a DL BWP to receive a channel or signal and a UL BWP to perform transmission. As the BWP-specific RB index, the UE may assume that an index of the lowest RB of the BWP is 0. Specifically, based on the common RB index, a start RB position of the BWP may be given $N_{BWP}^{start}$ . For example, an RB corresponding to the common RB index $N_{BWP}^{start}$ may be assigned the BWP-specific RB index 0. That is, $n_{CRB} = n_{PRB} + N_{BWP}^{start}$ .

where $n_{CRB}$ is the common RB index, and $n_{PRB}$ is the BWP-specific RB index.

3) subband-specific RB index

The UE may be configured with a UL subcarrier in a DL symbol. On the contrary, it may be configured with a DL subcarrier in a UL symbol. As the subband-specific RB index, the UE may assume that an index of the lowest of RBs included in the subband is 0.

Specifically, based on the common RB index, a start RB position of the subband may be given $N_{CRB-sub}^{start}$. For example, the UE may be configured with a value of the $N_{CRB-sub}^{start}$ by the BS through a higher layer signal. An RB corresponding to the common RB index $N_{CRB-sub}^{start}$ may be assigned the subband-specific RB index 0. That is, $n_{CRB} = n_{sub} + N_{CRB-sub}^{start}$. In this regard, $n_{CRB}$ is the common RB index, and $n_{sub}$ is the subband-specific RB index. For reference, the subband whose start RB position is set to a value of the $N_{CRB-sub}^{start}$ may be applied to all BWPs of the UE. In other words, it is not BWP-specific.

In another method, based on the BWP-specific RB index, a start RB position of the subband may be given $N_{PRB-sub}^{start}$. For example, the UE may be configured by the BS with a value of the $N_{PRB-sub}^{start}$ through a higher layer signal. The value may be set for a specific BWP. An RB corresponding to the BWP-specific RB index $N_{PRB-sub}^{start}$ may be assigned the subband-specific RB index 0. That is, $n_{PRB} = n_{sub} + N_{PRB-sub}^{start}$. In this regard, $n_{PRB}$ is the BWP-specific RB index, and $n_{sub}$ is the subband-specific RB index. By the method, the subband-specific RB index $n_{sub}$ may be represented as follows:

$$n_{sub} = n_{CRB} - N_{CRB-sub}^{start} = n_{PRB} + (N_{BWP}^{start} - N_{CRB-sub}^{start})$$

$$n_{sub} = n_{PRB} - N_{PRB-sub}^{start} = n_{CRB} - (N_{BWP}^{start} + N_{PRB-sub}^{start})$$

Accordingly, it may be represented as $N_{CRB-sub}^{start} = N_{BWP}^{start} + N_{PRB-sub}^{start}$, $N_{PRB-sub}^{start} = N_{CRB-sub}^{start} - N_{BWP}^{start}$.

<Resource configuration method>

In an embodiment, described is a resource configuration method for determining a PUSCH transmission position in the SBFD system. PUSCH transmission in the SBFD system may be performed in at least one of an SBFD symbol/slot (or UL subband symbol/slot), a UL-dedicated symbol/slot or a flexible symbol set to a UL symbol. The PUSCH transmission may be performed by using PUSCH repetitive transmission and PUSCH frequency hopping according to a UL signaling configuration.

The BS may configure the UE with UL subband configuration information and UL BWP configuration information through higher layer signaling. To perform PUSCH transmission, the UE may determine a transmission position in a frequency resource based on the configuration information. The UE may determine a PUSCH transmission position on the frequency domain based on the UL subband configuration configured by the BS in the SBFD symbol/slot. However, in the stage where the UE determines the frequency resource transmission position for PUSCH transmission in the UL-dedicated symbol/slot, it may be ambiguous whether to determine based on the UL subband configuration or the UL BWP configuration. For this, a method of determining an operation of the UE based on the time domain resource and frequency domain resource information configured for the UE will now be described in detail.

[Method 1. Determining a transmission position reference by considering a UL subband and a UL BWP]

The BS may configure PUSCH transmission for the UE by considering SBFD symbol/slot and UL-dedicated symbol/slot configurations. For example, the BS may allow a difference between a PUSCH transmission position in the SBFD symbol/slot and a PUSCH transmission position in the UL-dedicated symbol/slot for the UE. Assumptions for determining the PUSCH transmission position in the SBFD symbol and the PUSCH transmission position in the UL-dedicated symbol may follow at least one of the following methods:

[Method 1-1. Method of receiving separate configuration and/or indication information from the BS]

The BS may use separate UL signaling configuration information and/or DCI indication information to control operations in the UL symbol/slot. For example, when the BS configures the UE with a modification to the UL symbol/slot configuration, the UE may determine a PUSCH transmission position within a UL subband frequency resource configured in the SBFD symbol/slot and determine a PUSCH transmission position within a UL BWP frequency resource configured in the UL-dedicated symbol/slot. When the modification to the UL symbol/slot configuration is not configured, the UE may determine a PUSCH transmission position within the configured UL subband frequency resource, and transmit the PUSCH across both the SBFD symbol/slot and UL-dedicated symbol/slot.

[Method 1-2. Method of following a pre-agreed rule between the BS and the UE]

The BS and the UE may determine a transmission operation in the UL symbol/slot according to a pre-agreed rule. For example, configuration and/or indication information from the BS may not be required. In this case, the pre-agreed rule may refer to determining an operation based on the UL subband and UL BWP configurations configured for the UE by the BS. The BS may configure the UE with the UL subband configuration information and UL BWP configuration information in the SBFD symbol/slot. In this case, according to the pre-agreed rule between the UE and the BS, the UE may determine that PUSCH transmission is allowed across the SBFD symbol/slot and UL-dedicated symbol/slot, and perform PUSCH transmission across the SBFD symbol/slot and UL-dedicated symbol/slot.

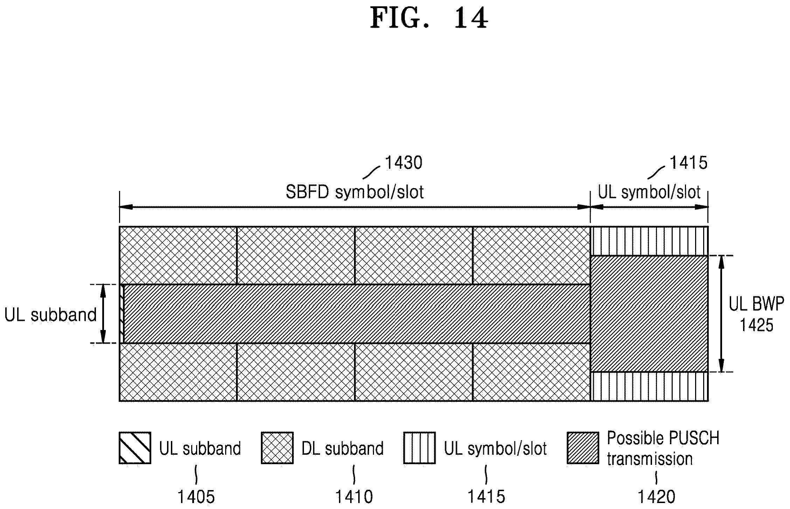

FIG. 14 illustrates a method of configuring PUSCH transmission positions across SBFD symbols and UL dedicated symbols, according to an embodiment.
In FIG. 14, the BS may configure the UE with a UL subband 1405 and a UL BWP 1425 on the frequency domain through UL subband configuration information and UL BWP configuration information, and allow PUSCH transmission across both the UL-dedicated symbol/slot 1415 and SBFD symbols/slots 1430 on the time domain according to a pre-agreed rule between the BS and UE. In this case, the UE may determine PUSCH transmission positions in a frequency resource region of the activated UL BWP 1425 in the UL-dedicated symbol/slot 1415 and in a frequency resource region of the UL subband 1405 in the SBFD symbol/slot 1430

[Method 2. Method of determining a position reference on the frequency domain based on a UL subband]

The UE may determine a PUSCH transmission position on the frequency domain based on a UL subband configuration configured and/or indicated from the BS. In this case, an RB start point of PUSCH transmission on the frequency domain may be determined to be an RB start point of the UL subband. The BS may configure the UE with time domain and frequency domain resources of the UL subband. The UE may perform PUSCH transmission based on the UL subband configuration configured by the BS. In the SBFD symbol/slot, the UL subband configured by the BS does not overlap the DL subband, enabling PUSCH transmission. Furthermore, based on the UL subband configuration, PUSCH transmission is possible even in the UL-dedicated symbol/slot. Based on the UL subband configuration, the BS may configure the UE to be able to perform PUSCH transmission across the SBFD symbol/slot and the UL-dedicated symbol/slot on the time domain.

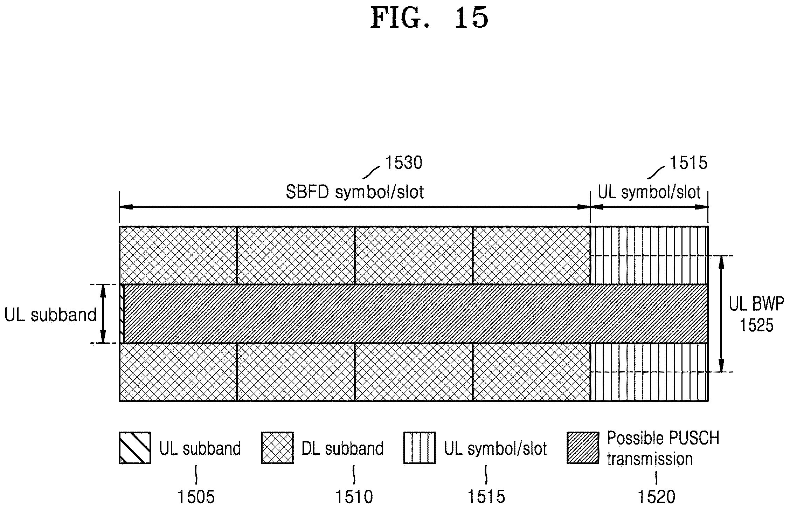

FIG. 15 illustrates a method of configuring PUSCH transmission with respect to a UL subband according to an embodiment.
In FIG. 15, the BS may configure a UL subband on the frequency domain through the UL subband configuration, and allow PUSCH transmission all across a UL-dedicated symbol/slot 1515 and an SBFD symbol/slot 1530 on the time domain. In this case, the UE may determine a PUSCH transmission position in the UL-dedicated symbol/slot and SBFD symbol/slot based on a frequency resource region of a UL subband 1505. Based on this, PUSCH transmission may be performed in the same frequency resource region even in the UL-dedicated symbol/slot.

[Method 3. Method of determining a position reference on the frequency domain based on a UL BWP]

The UE may determine a PUSCH transmission position on the frequency domain based on a UL BWP configuration configured and/or indicated from the BS. In this case, an RB start point of PUSCH transmission on the frequency domain may be determined to be an RB start point of an activated UL BWP.
For example, the BS may configure the UE with a UL BWP of a size larger than the size of the UL subband on the frequency domain through a UL BWP configuration. Furthermore, the BS may configure the UE with repetitive transmission and frequency hopping through PUSCH configuration information. The UE may determine a frequency domain position for PUSCH transmission based on the UL BWP configuration. However, in performing repetitive transmission configured for the UE, a PUSCH frequency domain transmission position configured based on the UL BWP may correspond to a region that exceeds the UL subband (i.e., that may overlap the DL subband region in the SBFD symbol/slot). To prevent this situation, the BS may allow the UE to transmit the PUSCH only in the UL-dedicated symbol/slot on the time domain. In this case, the UE may determine the PUSCH transmission position in the UL-dedicated symbol/slot based on the RB start point and RB length of the activated UL BWP, and a configured frequency hopping offset.

In another example, the BS may configure the UE with a UL BWP of a size equal to or smaller than the size of the UL subband on the frequency domain, through a UL BWP configuration. When the size of the activated UL BWP is equal to or smaller than the size of the UL subband on the frequency domain, the PUSCH transmission RB start point and the RB length in the UL subband do not overlap the DL resource. In this case, the BS may configure the UE to be able to perform PUSCH transmission not only in the UL-dedicated symbol/slot but also in the SBFD symbol/slot.

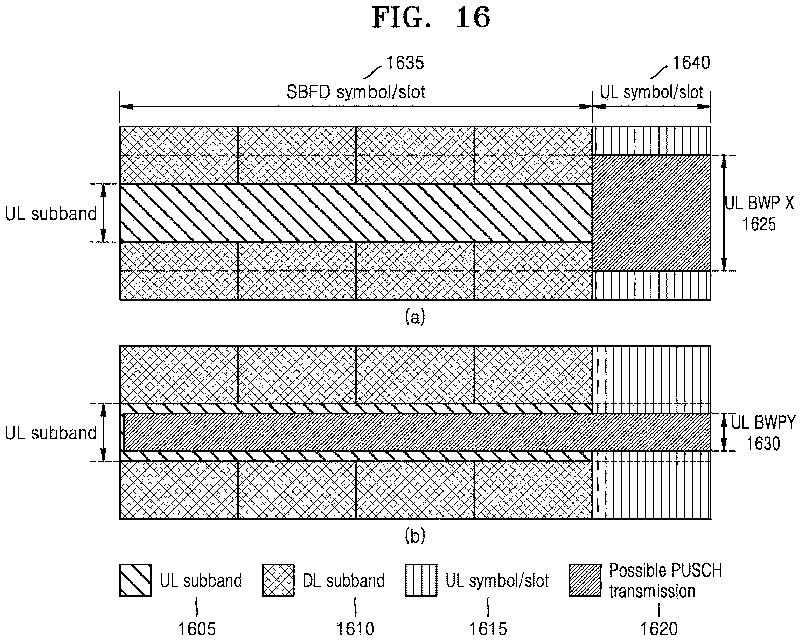

FIG. 16 illustrates a method of configuring PUSCH transmission with respect to a UL BWP, according to an embodiment.

In FIG. 16, the BS may configure the UE with a UL BWP 1625 of a size larger than the size of a UL subband 1605 on the frequency domain, and allow PUSCH transmission only in the UL-dedicated symbol/slot 1640 on the time domain. In this case, the UE may determine the PUSCH transmission position in the UL-dedicated symbol/slot based on a frequency resource region of a UL BWP 1625. However, in this case, the UE may not be allowed PUSCH transmission in an SBFD symbol/slot 1635.

In FIG. 16, the BS may configure the UE with a UL BWP 1630 of a size equal to or smaller than the size of the UL subband 1605 on the frequency domain, and allow PUSCH transmission all across the UL-dedicated symbol/slot 1640 and the SBFD symbol/slot 1635 on the time domain. In this case, the UE may determine the PUSCH transmission position in the UL-dedicated symbol/slot 1640 based on a frequency resource region of the UL BWP 1630. In this case, the UE may perform PUSCH transmission in the same frequency resource region as the UL BWP 1630 even in the SBFD slot/symbol.

<Method of determining a PUSCH transmission position on the frequency domain>

In an embodiment, described is a method of determining a PUSCH transmission position of the UE for PUSCH transmission all across the SBFD symbol/slot and the UL-dedicated symbol/slot of the UE.

The UE may be configured by the BS with repetitive transmission and frequency hopping through PUSCH transmission configuration information. The BS may configure the UE with the repetitive transmission and frequency hopping through PUSCH configuration information, and the UE may determine a position to transmit the PUSCH by taking into account the repetitive transmission and frequency hopping across the SBFD symbol and UL-dedicated symbol based on the configuration information. For example, the BS may allow the UE to perform PUSCH transmission across the SBFD symbol and UL-dedicated symbol. The BS may configure the UE with the PUSCH repetitive transmission type B and intra-slot frequency hopping through the PUSCH configuration information. In this case, the UE needs to determine a PUSCH transmission position suitable for each symbol/slot based on PUSCH configuration information configured by the BS. Methods of determining PUSCH transmission positions of the UE according to the symbol/slot configuration will now be described in detail.

[Method 1-1. Method of determining a PUSCH transmission position in the UL subband based on a UL subband configuration]

In PUSCH transmission in the UL subband, the UE may determine a PUSCH transmission position by using a subband-BWP offset value and frequency resource configuration information for the UL subband. The BS may configure and/or indicate frequency resource information (e.g., frequency resource RB start point, or frequency resource RB length) for the UL subband to the UE. The UE may determine a transmission start RB index for PUSCH transmission in the configured frequency resource. In this case, the frequency resource start RB index may be a frequency resource RB start point of the configured UL subband. A position of each hop for frequency hopping may be determined according to an RB start point of the frequency resource and an offset value configured through higher layer signaling. Equation 5 below is an example for determining a PUSCH transmission position in the UL subband frequency resource, and the index of the transmission hop may be changed according to the inter-slot/intra-slot frequency hopping configuration.

【Equation 5】

$$RB_{\text{start},0}^{SBFD} = RB_{start}^{UL\ SB}$$

$$RB_{\text{start},1}^{SBFD} = \left(RB_{start}^{UL\ SB} + RB_{offset}\right) mod N_{UL\ SB}^{size}$$

where $RB_{\text{start},0}^{SBFD}$ is an RB start point (subband RB index) of the first frequency hop, and $RB_{\text{start},1}^{SBFD}$ is an RB start point (subband RB index) of the second frequency hop. In Equation 5, $RB_{start}^{UL\ SB}$ may be an RB start point (subband RB index) of the PUSCH indicated in an FDRA field of a DCI format scheduling the PUSCH, $N_{UL\ SB}^{size}$ may be RB length of a UL subband, and $RB_{offset}$ may be an RB distance between an RB start point of the first hop and an RB start point of the second hop. Up to four $RB_{offset}$ may be configured by the BS for the UE, and a value may be indicated by the DCI format. Based on the configuration and the determined positions, the UE may determine transmission positions $RB_{\text{start},0}^{SBFD}$ and $RB_{\text{start},1}^{SBFD}$ of the PUSCH in the SBFD symbol/slot to transmit the PUSCH.

For reference, indexes $RB_{\text{start},0}^{SBFD}$ and $RB_{\text{start},1}^{SBFD}$ with respect to the subband RB index of Equation 5 may be converted to indexes $RB_{\text{start},0}^{BWP}$ and $RB_{\text{start},1}^{BWP}$ with respect to a certain BWP RB index as follows:

$$RB_{\text{start},0}^{BWP} = RB_{\text{start},0}^{SBFD} + N_{PRB-sub}^{start} = RB_{start}^{UL\ SB} + N_{PRB-sub}^{start}$$

$$RB_{\text{start},1}^{BWP} = RB_{\text{start},1}^{SBFD} + N_{PRB-sub}^{start} = \left(RB_{start}^{UL\ SB} + RB_{offset}\right) mod N_{UL\ SB}^{size} + N_{PRB-sub}^{start}$$

where $N_{PRB-sub}^{start}$ is the lowest RB index of the UL subband represented with respect to the certain BWP RB index.

For reference, finding a start RB index of frequency hopping of the PUSCH based on Equation 5 corresponds to a case that the PUSCH is scheduled in the SBFD symbol/slot. When the PUSCH is scheduled in the UL-dedicated symbol/slot, the UE may obtain two frequency hops based on the UL BWP as in Equation 3. The UE may obtain information about symbols in which the PUSCH is scheduled from a DCI format scheduling the PUSCH. This may be obtained in a time domain resource assignment (TDRA) field of the DCI format. When the PUSCH is scheduled in the UL-dedicated symbol/slot according to the obtained information, the UE may obtain two frequency hops based on the UL BWP as in Equation 3. When the PUSCH is scheduled in the SBFD symbol/slot (the symbol in which the UL subband is configured) according to the obtained information, the UE may obtain two frequency hops based on the UL subband as in Equation 5.

[Method 1-2. Method of determining and converting a UL BWP based PUSCH transmission position into a UL subband]

For PUSCH transmission, the UE may determine transmission RB start points of two hops in Equation 3. Equation 3 is a method of determining two hops based on a UL BWP. When the PUSCH is scheduled in a UL subband, the two hops may not be located within the UL subband. In this case, they may be located within the UL subband through an additional modulo operation. Assuming that the RB start points are $RB_{\text{start},0}$ and $RB_{\text{start},1}$ (certain BWP RB indexes) of the two hops determined in Equation 3, the RB start points of two hops in the UL subband may be computed as follows:

$$RB_{\text{start},0}^{BWP} = RB_{start,0} \bmod N_{UL\ SB}^{size} + N_{PRB-sub}^{start}$$

$$RB_{\text{start},1}^{BWP} = RB_{start,1} \bmod N_{UL\ SB}^{size} + N_{PRB-sub}^{start}$$

where $RB_{\text{start},0}^{BWP}$ is an RB start point (a certain BWP RB index) of the first frequency hop, and $RB_{\text{start},1}^{BWP}$ is an RB start point (a certain BWP RB index) of the second frequency hop. In the equations, $N_{UL\ SB}^{size}$ is RB length of the UL subband, and $N_{PRB-sub}^{start}$ is the lowest RB index of the UL subband represented based on a certain BWP RB index. Based on the configuration and the determined positions, the UE may determine transmission positions $RB_{start,0}^{BWP}$ and $RB_{start,1}^{BWP}$ of the PUSCH in the SBFD symbol/slot to transmit the PUSCH.

[Method 2. Method of determining a PUSCH transmission position in one region of the UL-dedicated symbol/slot based on a UL subband configuration]

The UE may determine a transmission RB start point for PUSCH transmission in the UL-dedicated symbol/slot. In this case, a frequency resource RB start point in the UL-dedicated symbol/slot may be a point at a distance of an offset value from the frequency resource RB start point in the configured UL subband. Furthermore, the frequency resource RB length in the UL-dedicated symbol/slot may correspond to the frequency resource RB length in the configured UL subband. The UE may move to the point based on a configured parameter and Equation 6 below:

【Equation 6】

$$RB_{start}^{UL} = \left(RB_{start}^{BWP} + RB_{offset,UL}\right)modN_{BWP}^{size}$$

where $RB_{start}^{UL}$ may indicate an RB start point (a certain BWP RB index) of the PUSCH in a frequency resource region that allows PUSCH transmission in the UL-dedicated slot, and $RB_{start}^{BWP}$ may indicate an index value obtained by converting the frequency resource RB start point $RB_{start}^{SBFD}$ (subband RB index) of the PUSCH transmission indicated in the FDRA field of the DCI format scheduling the PUSCH as mentioned in connection with Equation 5 with respect to a certain BWP RB index. $RB_{offset,UL}$ may be an offset value that moves the frequency resource RB start point ( $RB_{start}^{BWP}$ ) in the SBFD symbol/slot to a frequency resource RB start point ( $RB_{start}^{UL}$ ) in the UL-dedicated symbol/slot. In Equation 6, $N_{BWP}^{size}$ may represent RB length of a UL BWP.

With the method, in scheduling multiple UEs, the BS may prevent overlapping of transmission caused by frequency hopping between the UEs in the SBFD symbol/slot and the UL-dedicated symbol/slot, reducing complexity of scheduling of the multiple UEs through separate frequency resources.

Based on the aforementioned method, the UE may perform PUSCH transmission in a frequency resource moved by the offset value from the UL subband frequency resource configuration in the UL-dedicated symbol/slot. The UE may be configured with the offset value for determining the PUSCH transmission resource in the UL-dedicated symbol/slot from the BS. The UE may determine a PUSCH transmission position in the UL-dedicated symbol/slot based on configured parameters and Equation 7 below.

【Equation 7】

$$RB_{start,0}^{UL} = \left(RB_{start,0}^{BWP} + RB_{offset,UL}\right)modN_{BWP}^{size}$$

$$RB_{start,1}^{UL} = \left(RB_{start,1}^{BWP} + RB_{offset,UL}\right)modN_{BWP}^{size}$$

In Equation 7 above, $RB_{start,0}^{BWP}$ and $RB_{start,1}^{BWP}$ may represent frequency resource RB start points (certain BWP RB indexes) of the first and second hops, which are PUSCH transmission positions in the SBFD symbol/slot, $RB_{offset,UL}$ may represent an offset value between the frequency resource RB start point $RB_{start}^{BWP}$ in the SBFD symbol/slot and the frequency resource RB start point $RB_{start}^{UL}$ in the UL-dedicated symbol/slot, and $N_{BWP}^{size}$ may represent a size of the UL BWP. Based on the parameters, the frequency resource RB start points $RB_{start,0}^{UL}$ and $RB_{start,1}^{UL}$ (certain BWP RB indexes) of hops for PUSCH transmission in the UL-dedicated symbol/slot may be determined through the modulo operation. Specifically, the method may be for determining a PUSCH transmission position in the UL-dedicated symbol/slot by moving a PUSCH transmission position in the UL subband by $RB_{offset,UL}$.

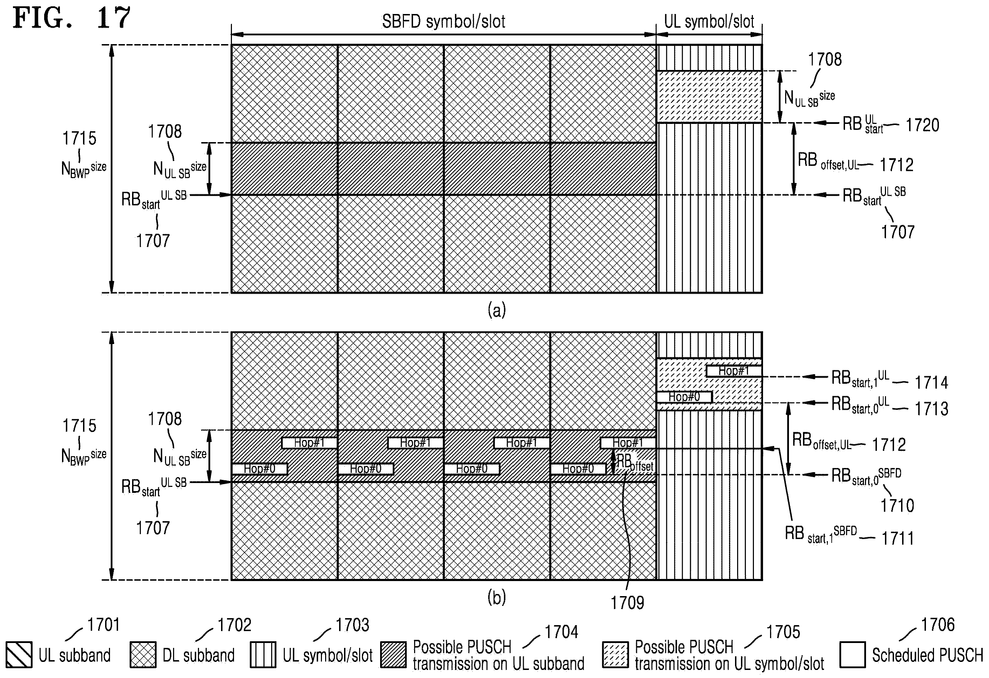

FIG. 17 illustrates a method of determining PUSCH transmission positions on a UL subband configuration basis, according to an embodiment.

In (a) of FIG. 17, a PUSCH transmission region in a UL-dedicated symbol/slot 1703 may be determined based on Equation 6 above. An RB start point $RB_{start}^{UL}$ 1720 to indicate a PUSCH transmission region in the UL-dedicated symbol/slot 1703 may be determined to be a point at a distance of $RB_{offset,UL}$ 1712 from a UL subband RB start point $RB_{start}^{UL\ SB}$ 1707 scheduled in the UL subband 1701. Furthermore, frequency resource RB length $N_{UL\ SB}^{size}$ 1708 in the PUSCH transmission region in the UL-dedicated symbol/slot 1703 may correspond to the UL subband frequency resource RB length $N_{UL\ SB}^{size}$ 1708 scheduled in the UL subband 1701.

In (b) of FIG. 17, a PUSCH transmission position in the UL subband 1701 may be determined based on Equation 5 above. $RB_{start}^{UL\ SB}$ 1707 and $N_{UL\ SB}^{size}$ 1708 may be a frequency resource RB start point in the UL subband 1701 and frequency resource RB length in the UL subband 1701, respectively, configured by the BS, and $RB_{offset}$ 1709 may be an offset value between frequency resource RB start points $RB_{start,0}^{SBFD}$ 1710 and $RB_{start,1}^{SBFD}$ 1711 of the first and second hops where the PUSCH is transmitted within the UL subband 1701.

In (b) of FIG. 17, a PUSCH transmission position in the UL-dedicated symbol/slot may be determined based on Equation 7. $RB_{start,0}^{SBFD}$ 1710 and $RB_{start,1}^{SBFD}$ 1711 represents RB start points of the first and second hops, respectively, which are PUSCH transmission positions in the SBFD symbol, $RB_{offset,UL}$ 1712 may represent an offset value between the frequency resource RB start point $RB_{start}^{UL\ SB}$ in the UL subband and the frequency resource RB start point $RB_{start}^{UL}$ for PUSCH transmission in the UL-dedicated symbol/slot, and $N_{BWP}^{size}$ 1715 may represent the size of a UL BWP.

[Method 3. Method of determining PUSCH transmission positions in multiple regions in the UL-dedicated symbol/slot based on a UL subband configuration]

The UE may determine two frequency resource RB start points for PUSCH transmission in the UL-dedicated symbol/slot. In this case, the frequency resource RB start points and RB length in the UL-dedicated symbol/slot may be bidirectionally located in the UL BWP, and may be points at distances of the respective RB offsets from the frequency resource RB start point in the configured UL subband. The UE may move to the points based on the configured parameters and Equation 8 below:

【Equation 8】

$$RB_{start,0}^{UL} = \left(RB_{start,0}^{BWP} + RB_{offset,UL,0}\right) \bmod N_{BWP}^{size}$$

$$RB_{start,1}^{UL} = \left(RB_{start,1}^{BWP} + RB_{offset,UL,1}\right) \bmod N_{BWP}^{size}$$

where $RB_{start}^{UL}$ indicates an RB start point (a certain BWP RB index) of the PUSCH in a frequency resource region that allows PUSCH transmission in the UL-dedicated symbol/slot, and $RB_{start}^{BWP}$ indicates an index value obtained by converting the RB start point $\text{RB}^{SBFD}_{\text{start}}$ (subband RB index) of the PUSCH indicated in the FDRA field of the DCI format scheduling the PUSCH as mentioned in connection with Equation 5 with respect to a certain BWP RB index. RB$_{offset,UL}$ may be an offset value that moves the frequency resource RB start point in the SBFD symbol/slot to a frequency resource RB start point in the UL-dedicated symbol/slot. In Equation 6 above, $N^{size}_{BWP}$ may represent RB length of a UL BWP. Specifically, the method may be for determining a PUSCH transmission position in the UL-dedicated symbol/slot by moving a PUSCH transmission position in the UL subband into two frequency regions by RB$_{offset,UL,0}$ and RB$_{offset,UL,1}$.

With the method, in scheduling multiple UEs, the BS may prevent overlapping of transmission caused by frequency hopping between the UEs in the SBFD symbol/slot, and improve frequency diversity performance as the distance between the two hops may be widened.

Based on the method, the UE may perform PUSCH transmission in a frequency resource moved by the offset value for each hop from the UL subband frequency resource configuration within the UL-dedicated symbol/slot. The UE may be configured with the offset value for determining the PUSCH transmission resource in the UL-dedicated symbol/slot from the BS. The UE may determine a PUSCH transmission position in the UL-dedicated symbol/slot based on the configured parameters and Equation 8 above.

Based on Equation 8 above, $\text{RB}^{SBFD}_{\text{start},0}$ and $\text{RB}^{SBFD}_{\text{start},1}$ may represent frequency resource RB start points of first and second hops which are PUSCH transmission positions in the SBFD symbol, and RB$_{offset,UL,0}$ may represent an offset value between the frequency resource RB start point $\text{RB}^{UL\ SB}_{\text{start}}$ in the UL subband and the frequency resource RB start point of the first hop for PUSCH transmission in the UL-dedicated symbol/slot. Accordingly, the UE may determine the frequency resource RB start point $\text{RB}^{UL}_{\text{start},0}$ of the first hop for PUSCH transmission in the UL-dedicated symbol/slot. Furthermore, RB$_{offset,UL,1}$ may represent an offset value between the frequency resource RB start point $\text{RB}^{UL\ SB}_{\text{start}}$ in the UL subband and a frequency resource RB start point of the second hop for PUSCH transmission in the UL-dedicated symbol/slot. Accordingly, the UE may determine the frequency resource RB start point $\text{RB}^{UL}_{\text{start},1}$ of the second hop for PUSCH transmission in the UL-dedicated symbol/slot. Specifically, the method may be for determining the first and second hops which are PUSCH transmission positions in the UL-dedicated symbol/slot by moving the frequency resource in the UL subband by RB$_{offset,UL,0}$ and RB$_{offset,UL,1}$ for the respective hops. In this case, RB$_{offset,UL,0}$ and RB$_{offset,UL,1}$ may have the same or different values depending on the configuration of the BS.

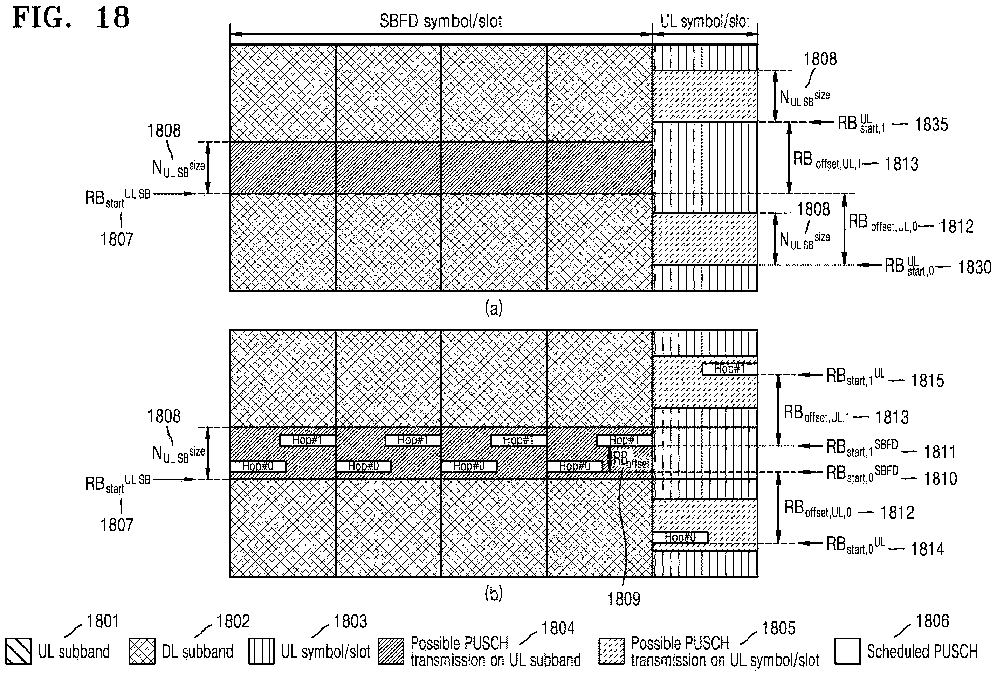

FIG. 18 illustrates a method of determining PUSCH transmission positions on a UL subband configuration basis, according to an embodiment.

In (a) of FIG. 18, a PUSCH transmission region in a UL-dedicated symbol/slot 1803 may be determined based on Equation 8 above. In (a) of FIG. 18, a frequency resource RB start point 1807 on the UL subband may be specified and described as index $\text{RB}^{UL\ SB}_{\text{start}}$ with respect to a certain BWP RB index.

There may be two PUSCH transmission regions in the UL-dedicated symbol/slot. In (a) of FIG. 18, respective frequency resource RB start points 1830 and 1835 of the PUSCH transmission regions in the UL-dedicated symbol/slot may be specified and described as indexes $\text{RB}^{UL}_{\text{start},0}$ and $\text{RB}^{UL}_{\text{start},1}$, respectively, with respect to the certain BWP RB index. The frequency resource RB start points $\text{RB}^{UL}_{\text{start},0}$ 1830 and $\text{RB}^{UL}_{\text{start},1}$ 1835 of the respective PUSCH transmission regions in the UL-dedicated symbol/slot may be determined by moving the frequency resource RB start point $\text{RB}^{UL\ SB}_{\text{start}}$ 1807 of a UL subband 1801 scheduled in the UL subband 1801 by RB$_{offset,UL,0}$ 1812 and RB$_{offset,UL,1}$ 1813, respectively. Furthermore, frequency resource RB length $N^{size}_{UL\ SB}$ 1808 in the PUSCH transmission region in the UL-dedicated symbol/slot 1803 may correspond to the UL subband frequency resource RB length $N^{size}_{UL\ SB}$ 1808 scheduled in the UL subband 1801.

In (b) of FIG. 18, a PUSCH transmission position in the UL subband 1801 may be determined based on Equation 5 above. In (b) of FIG. 18, a frequency resource RB start point on the UL subband may be specified and described as index

$RB_{start}^{UL\ SB}$ based on a certain BWP RB index. A frequency resource RB start point 1810 of the first hop, which is a PUSCH transmission position in the SBFD symbol/slot and a frequency resource RB start point 1811 of the second hop may be specified and described as indexes $RB_{start,0}^{SBFD}$ and $RB_{start,1}^{SBFD}$ with respect to the subband RB index or indexes $RB_{start,0}^{BWP}$ and $RB_{start,1}^{BWP}$ with respect to certain BWP RB indexes, respectively. A frequency resource RB start point 1814 of the first hop, which is a PUSCH transmission position in the UL-specified symbol/slot and a frequency resource RB start point 1815 of the second hop may be specified and described as indexes $RB_{start,0}^{UL}$ and $RB_{start,1}^{UL}$, respectively, with respect to the certain BWP RB index. $RB_{start}^{UL\ SB}$ 1807 and $N_{UL\ SB}^{size}$ 1808 may be a frequency resource RB start point in the UL subband 1701 and frequency resource RB length in the UL subband, respectively, configured by the BS, and $RB_{offset}$ 1809 may be an offset value between frequency resource RB start points of the first and second hops where the PUSCH is transmitted within the UL subband.

The PUSCH transmission position in the UL-dedicated symbol/slot may be determined based on Equation 7. $RB_{start,0}^{SBFD}$ 1810 and $RB_{start,1}^{SBFD}$ 1811 may represent frequency resource RB start points of the first and second hops, respectively, which are PUSCH transmission positions in the SBFD symbol, RB$_{offset,UL,0}$ 1812 may represent an offset value between the frequency resource RB start point $RB_{start,0}^{SBFD}$ 1810 of the first hop on the UL subband and the frequency resource RB start point $RB_{start,0}^{UL}$ 1814 of the first hop for PUSCH transmission in the UL-dedicated symbol/slot, and RB$_{offset,UL,1}$ 1813 may represent an offset value between the frequency resource RB start point $RB_{start,1}^{SBFD}$ 1811 of the second hop on the UL subband and the frequency resource RB start point $RB_{start,1}^{UL}$ 1815 of the second hop for PUSCH transmission in the UL-dedicated symbol/slot.

[Method 4. Method of determining PUSCH transmission position in SBFD symbol/slot with respect to each UL-dedicated symbol/slot]

In the SBFD symbol/slot, the UE may perform PUSCH transmission in a frequency resource moved by the offset value from a frequency resource configuration in the UL-dedicated symbol/slot.

The UL-dedicated symbol/slot may be configured based on Equation 9 below:

【Equation 9】

$$RB_{start}^{UL} = \begin{cases} RB_{start}, & i = 0 \\ (RB_{start} + RB_{offset}) mod N_{BWP}^{size}, & i = 1 \end{cases}$$

In Equation 9 above, i=0 and i=1 refer to a first hop and a second hop, respectively. $RB_{start}$ may be a frequency resource start RB point in a UL-dedicated symbol/slot configuration, $N_{BWP}^{size}$ may be RB length of the frequency resource of the UL BWP, and $RB_{offset}$ may be an RB distance between first and second hops.

When the size of the UL BWP frequency resource configured in the UL-dedicated symbol/slot is larger than the size of the UL subband frequency resource, the PUSCH resource configuration may need to be changed. In this case, according to Equation 10, a PUSCH transmission position on the UL subband may be determined.

【Equation 10】

$$RB_{start,0}^{BWP} = (RB_{start,0}^{UL} + RB_{offset,SBFD,0}) \bmod N_{UL\ SB}^{size} + N_{PRB-sub}^{start}$$

$$RB_{start,1}^{BWP} = (RB_{start,1}^{UL} + RB_{offset,SBFD,1}) \bmod N_{UL\ SB}^{size} + N_{PRB-sub}^{start}$$

In Equation 10 above, $RB^{UL}_{start,0}$ and $RB^{UL}_{start,1}$ may represent frequency resource RB start points (certain BWP RB indexes) of the first and second hops, which are PUSCH transmission positions in the UL-dedicated symbol/slot, $RB_{offset,SBFD,0}$ may represent an offset value between the frequency resource RB start point $RB^{UL}_{start,0}$ of the first hop for PUSCH transmission in the UL-dedicated symbol/slot and the frequency resource RB start point $RB^{SBFD}_{start,0}$ of the first hop for PUSCH transmission on the UL subband, and $N^{size}_{UL\_SB}$ may represent a size of the UL subband. With the parameters and the modulo operation, the frequency resource RB start point $RB^{SBFD}_{start,0}$ (subband RB index) of the first hop for PUSCH transmission in the SBFD symbol/slot may be determined. In this case, $RB^{BWP}_{start,0}$ may be an index value converted from $RB^{SBFD}_{start,0}$ with respect to the certain BWP RB index. Furthermore, $RB_{offset,SBFD,1}$ may represent an offset value between the frequency resource RB start point $RB^{UL}_{start,1}$ of the second hop for PUSCH transmission in the UL-dedicated symbol/slot and the frequency resource RB start point $RB^{SBFD}_{start,1}$ of the second hop for PUSCH transmission on the UL subband. With the parameters and the modulo operation, the frequency resource RB start point $RB^{SBFD}_{start,1}$ (subband RB index) of the second hop for PUSCH transmission in the SBFD symbol/slot may be determined. In this case, $RB^{BWP}_{start,1}$ may be an index value converted from $RB^{SBFD}_{start,1}$ with respect to the certain BWP RB index. Specifically, the method may be for determining frequency resources of the first and second hops which are PUSCH transmission positions in the SBFD symbol/slot by moving the frequency resource in the UL-dedicated symbol/slot by $RB_{offset,SBFD,0}$ and $RB_{offset,SBFD,1}$ for the respective hops.

[Method 5. Method of determining a PUSCH transmission position in one region of the UL-dedicated symbol/slot based on a UL subband configuration (in a case of configuring no frequency hopping)]

The UE that is not configured with frequency hopping may determine a frequency resource RB start point for PUSCH transmission based on the methods of Equations 6 to 8 above (method of determining a PUSCH transmission position in the UL-dedicated symbol/slot based on the UL subband configuration).

The BS may configure and/or indicate frequency resource information (e.g., frequency resource RB start point, or frequency resource RB length) for the UL subband to the UE. The BS may configure whether to perform frequency hopping and repetitive transmission in PUSCH transmission configuration information. In this case, the BS may configure repetitive transmission but may not configure frequency hopping for the UE. In this case, even without the frequency hopping, the UE may use the method of Equations 6 to 8 above to determine a PUSCH transmission position in the UL-dedicated symbol/slot.

For the UE that is not configured with the frequency hopping (i.e., not configured by the BS with the frequency hopping or configured with the frequency hopping in which case, however, the offset value between two hops is set to 0), determining of the PUSCH transmission position in the UL-dedicated symbol/slot may be made, for example, as in Equation 7. The frequency resource RB start point $RB^{BWP}_{start,0}$ of the first hop and the frequency resource RB start point $RB^{BWP}_{start,1}$ of the second hop for PUSCH transmission on the UL subband may be the same RB point. The frequency resource RB start point in the UL-dedicated symbol/slot may be an RB point moved by an offset value $RB_{offset,UL}$ between the frequency resource RB start point in the SBFD symbol/slot and the frequency resource RB start point in the UL-dedicated symbol/slot. Based on what are mentioned above, the frequency resource RB start point $RB^{UL}_{start,0}$ of the first hop and the frequency resource RB start point $RB^{UL}_{start,1}$ of the second hop for the PUSCH in the UL-dedicated symbol/slot may be the same RB point.

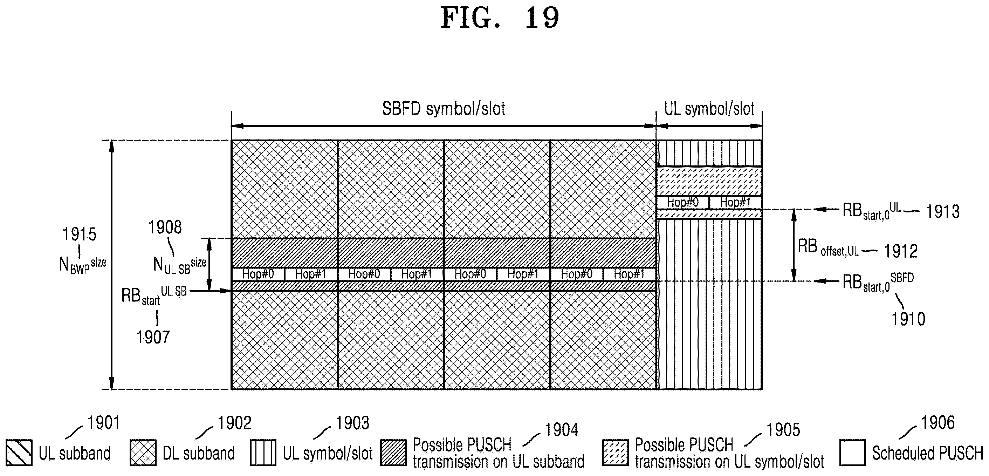

FIG. 19 illustrates a method of determining PUSCH transmission positions without frequency hopping on a UL subband configuration basis, according to an embodiment.

In FIG. 19, a PUSCH transmission position on the UL subband 1901 may be determined based on Equation 5

above. $\text{RB}_{\text{start}}^{UL\ SB}$ 1907 and $N_{UL\ SB}^{size}$ 1908 may be a frequency resource RB start point and frequency resource RB length, respectively, on the UL subband configured by the BS. In the meantime, as the UE is not configured by the BS with the frequency hopping, frequency resource RB start points of the first and second hops may be the same $\text{RB}_{\text{start},0}^{SBFD}$ 1910. In this case, a PUSCH transmission position in the UL-dedicated symbol/slot may be determined based on Equation 7. Specifically, a frequency resource RB start point $\text{RB}_{\text{start},0}^{UL}$ 1913 for PUSCH transmission in the UL-dedicated symbol/slot may be a point at a distance of $\text{RB}_{\text{offset},UL}$ 1912 from the frequency resource RB start point $\text{RB}_{\text{start},0}^{SBFD}$ 1910 for PUSCH transmission in the SBFD symbol/slot.

<Method of altering PUSCH scheduling information>

In an embodiment of the disclosure, the UL subband-UL BWP offset value may be changed through the aforementioned configuration and indication.

UL scheduling information may be statically, semi-statically, or dynamically changed. In an embodiment of the disclosure, the BS may configure or indicate the UL scheduling information to the UE by higher layer signaling or L1 signaling or a combination of the higher layer signaling and the L1 signaling. For example, the BS may perform UL transmission configuration for the UE by higher layer signaling. In another example, the BS may perform one or multiple UL configurations for the UE by higher layer signaling, and one transmission configuration of the multiple UL configurations may be activated by L1 signaling.

In an embodiment of the disclosure, the UL configuration (i.e., PUSCH transmission configuration) may be changed based on L1 signaling (e.g., DCI). The aforementioned changing may follow at least one of the following methods:

[Method 1. Method of indicating a change in configuration of arbitrary UL subband-UL BWP offset]

The BS may change an arbitrary UL subband-UL BWP offset value for the UE through L1 signaling.

The BS may configure the UE with UL subband-UL BWP offset value to determine a PUSCH transmission position in the UL subband configuration based UL-dedicated symbol. In this case, the BS may indicate changing of the offset to the UE. Specifically, the BS may transmit a DCI format including an indicator to change arbitrary UL subband-UL BWP offset configuration A to arbitrary UL subband-UL BWP offset configuration B for the UE through a PDCCH. The UE may receive the DCI format including an indication to change the UL subband-UL BWP offset from the BS, and based on what is indicated in the received DCI format, change the arbitrary UL subband-UL BWP offset configuration A to the arbitrary UL subband-UL BWP offset configuration B.

[Method 2. Method of indicating a change in configuration of N UL subband-UL BWP offsets in a set]

The BS may change into one value of N UL subband-UL BWP offsets in the set for the UE through L1 signaling.

The UL subband-UL BWP offset configuration may be selected from a table comprised of multiple configuration values or configured by the BS for the UE through higher layer signaling. For example, a "UL subband-UL BWP offset table" comprised of N UL subband-UL BWP offset values {offset #1, offset #2, ... offset #N} may be predefined or configured by the BS for the UE through higher layer signaling. The BS may transmit an indicator to activate an arbitrary offset #N in the UL subband-UL BWP offset table to the UE through L1 signaling (e.g., DCI). The UE may activate offset #N indicated by the L1 signaling (e.g., the DCI format) received from the BS based on the predefined or preconfigured UL subband-UL BWP offset table.

< UE capability reporting method>

In an embodiment of the disclosure, the UE may report at least one of the following options of UE capabilities representing an ability to perform a UE operation as described in the aforementioned various embodiments.

- UE capability that refers to whether to support the full-duplex communication system
- UE capability that refers to each resource configuration method in the full-duplex communication system and whether to support the method
- UE capability that refers to whether to support frequency hopping in the full-duplex communication system
- UE capability that refers to whether to support alteration of the resource configuration in the full-duplex communication system

- UE capability that refers to whether to support a frequency offset that may be additionally considered in the method of determining each frequency hopping position in the full-duplex communication system

The aforementioned UE capabilities are optional with capability signaling, and may support signaling distinguished according to FR1/FR2. Some or all of the aforementioned UE capabilities may be included in one feature group, and each UE capability may support individual feature group signaling. The aforementioned UE capability may support signaling for each UE, each band combination, each band, or each CC.

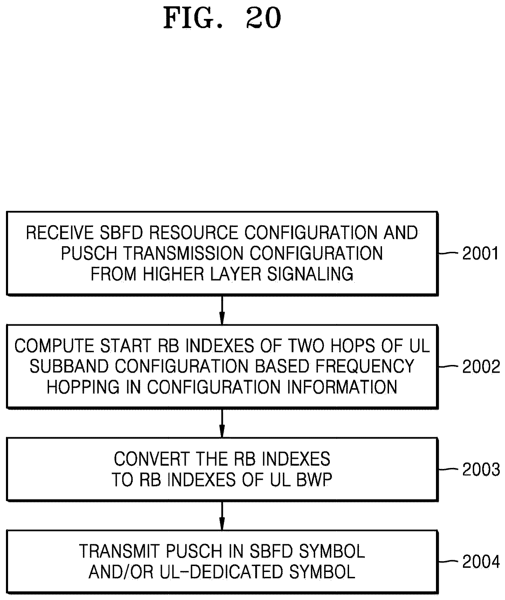

FIG. 20 is a diagram illustrating an operation of a UE, according to an embodiment of the disclosure.

Referring to FIG. 20, in a first operation 2001, the UE may be configured with resource configuration and PUSCH transmission from a higher layer. The resource configuration may include DL-UL frequency domain and time domain resources and DL-UL BWP configuration of an SBFD system in a radio frame. The PUSCH transmission configuration information may include an operation configuration in a frequency resource (e.g., repetitive transmission configuration and frequency hopping configuration).

In a second operation 2002, the UE may use a parameter obtained through the configuration information to compute a start RB index of each hop of the UL subband configuration based frequency hopping.

In a third operation 2003, the UE may use the parameter obtained through the configuration information and the computation result of the second operation to convert the RB index of the second operation to an RB index of a UL BWP.

In a fourth operation 2004, the UE may transmit a PUSCH in the time domain (SBFD symbol or UL-dedicated symbol).

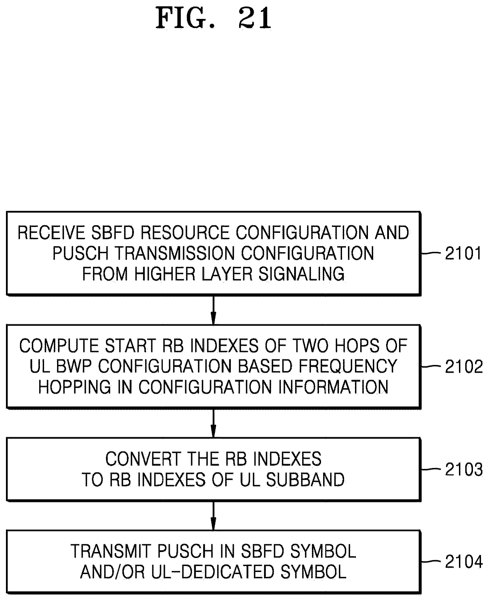

FIG. 21 is a diagram illustrating an operation of a UE, according to an embodiment of the disclosure.

Referring to FIG. 21, in a first operation 2101, the UE may be configured with resource configuration and PUSCH transmission from a higher layer. The resource configuration may include DL-UL frequency domain and time domain resource and DL-UL BWP configuration of an SBFD system in a radio frame. The PUSCH transmission configuration information may include an operation configuration in a frequency resource (e.g., repetitive transmission configuration and frequency hopping configuration).

In a second operation 2102, the UE may use a parameter obtained through the configuration information to compute a start RB index of each hop of the UL BWP configuration based frequency hopping.

In a third operation 2103, the UE may use the parameter obtained through the configuration information and the computation result of the second operation to convert the RB index of the second operation to an RB index of a UL subband.

In a fourth operation 2104, the UE may transmit a PUSCH in the time domain (SBFD symbol or UL-dedicated symbol).

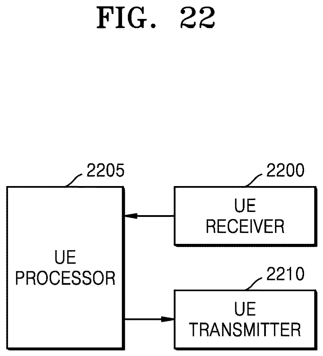

FIG. 22 is a block diagram of a UE in a wireless communication system, according to an embodiment of the disclosure.

Referring to FIG. 22, the UE may include a transceiver including a UE receiver 2200 and a UE transmitter 2210, a memory (not shown), and a UE processor 2205 (or a UE controller or a processor). The transceiver 2200 and 2210, the memory and the UE processor 2205 of the UE may operate according to the aforementioned communication method of the UE. Components of the UE are not, however, limited thereto. For example, the UE may include more or fewer elements than described above. In addition, the transceiver 2200 and 2210, the memory and the processor 2205 may be implemented in a single chip.

The transceiver 2200 and 2210 may transmit or receive signals to or from a BS. The signals may include control information and data. For this, the transceiver may include an RF transmitter for up-converting the frequency of a signal to be transmitted and amplifying the signal and an RF receiver for low-noise amplifying a received signal and down-converting the frequency of the received signal. It is, however, merely an example of the transceiver, and the elements of the transceiver are not limited to the RF transmitter and RF receiver.

In addition, the transceiver 2200 and 2210 may receive a signal on a wireless channel and output the signal to the processor, and transmit a signal output from the processor on a wireless channel.

The memory may store a program and data required for operation of the UE. Furthermore, the memory may store control information or data included in a signal transmitted or received by the UE. The memory may include a storage medium such as a read only memory (ROM), a random access memory (RAM), a hard disk, a compact disk (CD) ROM (CD-ROM), and a digital versatile disk (DVD), or a combination of storage mediums. Moreover, the memory may be in the plural.

The processor 2205 may also control a series of processes for the UE to be operated according to the aforementioned embodiment. For example, the processor 2205 may control the components of the UE so that the UE receives DCI including two layers to receive multiple PDSCHs at the same time. The processor 2205 may be provided in the plural, which may perform operations for controlling the components of the UE by executing a program stored in the memory.

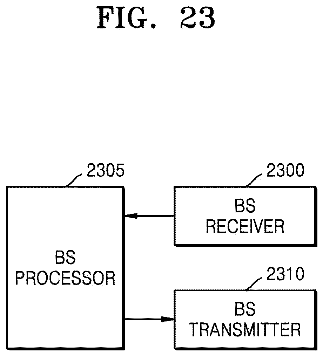

FIG. 23 is a block diagram of a UE in a wireless communication system, according to an embodiment of the disclosure.

Referring to FIG. 23, the BS may include a transceiver including a BS receiver 2300 and a BS transmitter 2310, a memory (not shown), and a BS processor 2305 (or a BS controller or a processor). The transceiver 2300 and 2310, the memory and the BS processor 2305 of the BS may operate according to the aforementioned communication method of the BS. Components of the BS are not, however, limited thereto. For example, the BS may include more or fewer components than described above. In addition, the transceiver 2300 and 2310, the memory, and the processor 2305 may be implemented in a single chip.

The transceiver 2300 and 2310 may transmit or receive signals to or from a UE. The signals may include control information and data. For this, the transceiver 2300 and 2310 may include an RF transmitter for up-converting the frequency of a signal to be transmitted and amplifying the signal and an RF receiver for low-noise amplifying a received signal and down-converting the frequency of the received signal. It is merely an example of the transceiver 2300 and 2310, and the elements of the transceiver 2300 and 2310 are not limited to the RF transmitter and RF receiver.

In addition, the transceiver 2300 and 2310 may receive a signal on a wireless channel and output the signal to the processor 2305, and transmit a signal output from the processor 2305 on a wireless channel

The memory may store a program and data required for operation of the BS. Furthermore, the memory may store control information or data included in a signal transmitted or received by the BS. The memory may include a storage medium such as a read only memory (ROM), a random access memory (RAM), a hard disk, a compact disk (CD) ROM (CD-ROM), and a digital versatile disk (DVD), or a combination of storage mediums. Moreover, the memory may be in the plural.

The processor 2305 may control a series of processes for the BS to be operated according to the aforementioned embodiment of the disclosure. For example, the processor 2305 may control the components of the BS to configure and transmit DCIs of two layers, which include allocation information for multiple PDSCHs. The processor 2305 may be provided in the plural, which may perform operations for controlling the components of the BS by executing a program stored in the memory.

Methods according to the claims of the disclosure or the embodiments of the disclosure described in the specification may be implemented in hardware, software, or a combination of hardware and software.

When implemented in software, a computer-readable storage medium storing one or more programs (software modules) may be provided. The one or more programs stored in the computer-readable storage medium are configured for execution by one or more processors in an electronic device. The one or more programs may include instructions that cause the electronic device to perform the methods in accordance with the claims of the disclosure or the embodiments described in the specification.

The programs (software modules, software) may be stored in a random access memory (RAM), a non-volatile memory including a flash memory, a read only memory (ROM), an electrically erasable programmable ROM (EEPROM), a magnetic disc storage device, a compact disc-ROM (CD-ROM), a digital versatile disc (DVD) or other types of optical storage device, and/or a magnetic cassette. Alternatively, the programs may be stored in a memory including a combination of some or all of them. There may be a plurality of memories.

The program may also be stored in an attachable storage device that may be accessed over a communication network including the Internet, an intranet, a local area network (LAN), a wide LAN (WLAN), or a storage area network (SAN), or a combination thereof. The storage device may be connected to an apparatus performing the embodiments of the disclosure through an external port. In addition, a separate storage device in the communication network may be connected to the apparatus performing the embodiments of the disclosure.

In the embodiments of the disclosure, a component is represented in a singular or plural form. It should be understood, however, that the singular or plural representations are selected appropriately according to the situations presented for convenience of explanation, and the disclosure is not limited to the singular or plural form of the component. Further, the component expressed in the plural form may also imply the singular form, and vice versa.

The embodiments of the disclosure have been described, but a person of ordinary skill in the art will understand and appreciate that various modifications can be made without departing the scope of the disclosure. Thus, it will be apparent to those of ordinary skill in the art that modifications to the embodiments of the disclosure based on the technical idea of the disclosure are also feasible. Furthermore, the embodiments may be operated by being combined with one another if necessary. For example, an embodiment of the disclosure and some of another embodiment of the disclosure may be combined to operate the BS and the UE. For example, an embodiment of the disclosure and some of another embodiment of the disclosure may be combined to operate the BS and the UE. Although the embodiments are provided with respect to an FDD LTE system, modifications of the embodiments based on the technical idea of the above embodiments of may also be employed by other systems such as a TDD LTE system, a 5G or NR system, etc.

The description order of the method of the disclosure as in the drawings may not exactly correspond to actual execution order, but may be performed reversely or in parallel.

Some of the components shown in the drawings may be omitted within a range that does not deviate the scope of the disclosure.

In the disclosure, a method may be performed by combining some or all of what are described in the respective embodiments of the disclosure within the scope of the disclosure.

Various embodiments of the disclosure have thus far been described. The aforementioned embodiments of the disclosure are merely for illustration, and are not limited thereto. Several embodiments have been described, but a person of ordinary skill in the art will understand and appreciate that various modifications can be made without departing the scope of the disclosure. The scope of the disclosure is defined by the appended claims, and it will be understood by those of ordinary skill in the art that various changes in form and details may be made without departing from the spirit and scope of the disclosure as defined by the appended claims and their equivalents.

## Claims

1. A method for transmitting a physical uplink shared channel (PUSCH) by a terminal in a wireless communication system, the method comprising:

   identifying a time division duplex (TDD) uplink (UL)-downlink (DL) configuration including at least one of a DL slot or a UL slot, and a UL subband in the DL slot;
   identifying first frequency index information and second frequency index information for frequency hopping in the UL subband in the DL slot; and
   based on the first frequency index information and the second frequency index information, performing frequency hopping for the PUSCH in the UL subband in the DL slot.

2. The method of claim 1, wherein:

   the identifying of the first frequency index information and the second frequency index information comprises identifying the first frequency index information based on first start resource block (RB) index information, and identifying the second frequency index information based on the first start RB index information and second RB offset information, and
   the first start RB index information and the second RB offset information are indicated by downlink control information (DCI) scheduling the PUSCH.

3. The method of claim 1, further comprising:

   identifying third frequency index information and fourth frequency index information for frequency hopping in the UL slot, based on the first frequency index information and the second frequency index information; and
   based on the third frequency index information and the fourth frequency index information, performing frequency hopping for the PUSCH in the UL slot.

4. The method of claim 3, further comprising:

   receiving, from a base station, second resource block (RB) offset information indicating an offset for frequency hopping between the UL subband in the DL slot and the UL slot,
   wherein the identifying of the third frequency index information and the fourth frequency index information comprises identifying the third frequency index information based on the first frequency index information and the second RB offset information, and identifying the fourth frequency index information based on the second frequency index information and the second RB offset information.

5. The method of claim 3, further comprising:

   receiving, from a base station, second resource block (RB) offset information and third RB offset information indicating offsets for frequency hopping between the UL subband in the DL slot and the UL slot,
   wherein the identifying of the third frequency index information and the fourth frequency index information comprises identifying the third frequency index information based on the first frequency index information and the second RB offset information, and identifying the fourth frequency index information based on the second frequency index information and the third RB offset information.

6. The method of claim 1, wherein the identifying of the first frequency index information and the second frequency index information comprises:

identifying third frequency index information and fourth frequency index information for frequency hopping in the UL slot,

identifying second resource block (RB) offset information and third RB offset information indicating offsets between the UL subband in the DL slot and the UL slot, and

identifying the first frequency index information based on the third frequency index information and the second RB offset information, and identifying the second frequency index information based on the fourth frequency index information and the third RB offset information.

7. The method of claim 3, wherein the first frequency index information indicates a start RB index of a first frequency hop in the UL subband in the DL slot, the second frequency index information indicates a start RB index of a second frequency hop in the UL subband in the DL slot, the third frequency index information indicates a start RB index of a first frequency hop in the UL slot, and the fourth frequency index information indicates a start RB index of a second frequency hop in the UL slot.

8. A terminal configured to transmit a physical uplink shared channel (PUSCH) in a wireless communication system, the terminal comprising:

a transceiver; and
a processor connected to the transceiver, wherein the processor is configured to:

identify a time division duplex (TDD) uplink (UL) - downlink (DL) configuration including at least one of a DL slot or a UL slot, and a UL subband in the DL slot, identify first frequency index information and second frequency index information for frequency hopping in the UL subband in the DL slot, and

based on the first frequency index information and the second frequency index information, perform frequency hopping for the PUSCH in the UL subband in the DL slot.

9. The terminal of claim 8, wherein:

the identifying of the first frequency index information and the second frequency index information comprises identifying the first frequency index information based on first start resource block (RB) index information, and identifying the second frequency index information based on the first start RB index information and second RB offset information, and

the first start RB index information and the second RB offset information are indicated by downlink control information (DCI) scheduling the PUSCH.

10. The terminal of claim 8, wherein the processor is configured to

identify third frequency index information and fourth frequency index information for frequency hopping in the UL slot based on the first frequency index information and the second frequency index information, and

based on the third frequency index information and the fourth frequency index information, perform frequency hopping for the PUSCH in the UL slot.

11. The terminal of claim 10, wherein:

the processor is configured to receive, from a base station, second resource block (RB) offset information indicating an offset for frequency hopping between the UL subband in the DL slot and the UL slot, and

the identifying of the third frequency index information and the fourth frequency index information comprises identifying the third frequency index information based on the first frequency index information and the second RB offset information, and identifying the fourth frequency index information based on the second frequency index information and the second RB offset information.

12. The terminal of claim 10, wherein:

the processor is configured to receive, from a base station, second resource block (RB) offset information and third RB offset information indicating offsets for frequency hopping between the UL subband in the DL slot and the UL slot, and

the identifying of the third frequency index information and the fourth frequency index information comprises identifying the third frequency index information based on first frequency index information and the second RB offset information, and identifying the fourth frequency index information based on the second frequency index information and the third RB offset information.

13. The terminal of claim 8, wherein the identifying of the first frequency index information and the second frequency index information comprises:

identifying third frequency index information and fourth frequency index information for frequency hopping in the UL slot,

identifying second resource block (RB) offset information and third RB offset information indicating offsets between the UL subband in the DL slot and the UL slot, and

identifying the first frequency index information based on the third frequency index information and the second RB offset information, and identifying the second frequency index information based on the fourth frequency index information and the third RB offset information.

14. A method for receiving a physical uplink shared channel (PUSCH) by a base station in a wireless communication system, the method comprising:

configuring a terminal with a time division duplex (TDD) uplink (UL) - downlink (DL) configuration including at least one of a DL slot or a UL slot, and a UL subband in the DL slot;

identifying first frequency index information and second frequency index information for frequency hopping in the UL subband in the DL slot; and

based on the first frequency index information and the second frequency index information, receiving the PUSCH from the terminal based on frequency hopping in the UL subband in the DL slot.

15. A base station configured to receive a physical uplink shared channel (PUSCH) in a wireless communication system, the base station comprising:

a transceiver; and

a processor connected to the transceiver, wherein the processor is configured to:

configure a terminal with a time division duplex (TDD) uplink (UL)-downlink (DL) configuration including at least one of a DL slot or a UL slot, and a UL subband in the DL slot,

identify first frequency index information and second frequency index information for frequency hopping in the UL subband in the DL slot, and

based on the first frequency index information and the second frequency index information, receive the PUSCH from the terminal based on frequency hopping in the UL subband in the DL slot.

# FIG. 1

One subframe

$N_{symb}^{subframe,\mu}$ OFDM symbols

1 OFDM symbols —102

1 subcarrier
103

$k = N_{RB,x}^{max,\mu} N_{sc}^{RB} - 1$

$N_{RB}^{\mu} N_{sc}^{RB}$ subcarriers

104
Resource block $N_{sc}^{RB}$ subcarriers

Resource element (k,l) 101

$k = 0$

Frequency

Time

$\bar{l} = 0$

$\bar{l} = 14 \cdot 2^{\mu} - 1$

FIG. 2

1 frame 200

1 subframe 201

slot 202

$\mu = 0$ 204

0 1 2 3 4 5 6 7 8 9

slot 203

$\mu = 1$ 205

0 1 2 3 4 5 6 7 8 9 10 11 12 13 14 15 16 17 18 19

# FIG. 3

# FIG. 4

Duration
404

Frequency
resources
403

UE
bandwidth
part
410

Slot
420

Frequency

Time

control resource set#1 — 401

control resource set#2 — 402

# FIG. 5

# FIG. 6

# FIG. 7

RA type 0
7-00

| Bitmap |
|--------|

7-15

RA type 1
7-05

| Starting VRB | Length |
|--------------|--------|

7-20        7-25

Both RA
type 0 & 1
7-10

| 1 bit for RA type indication | Max{payload for RA type 0, payload for RA type 1} |
|------------------------------|----------------------------------------------------|

7-30        7-35

# FIG. 8

$$\text{Slot} \left\lfloor n \cdot \frac{2^{\mu}_{PDSCH}}{2^{\mu}_{PDCCH}} \right\rfloor + K_0 \quad \text{—} \quad 8\text{-}10$$

# FIG. 9

9-00

$\mu_{PDCCH} = 1$ — PDCCH, Slot n, Slot n + 1

$\mu_{PDSCH} = 1$ — PDSCH, Slot n + $K_0$

9-05

$\mu_{PDCCH} = 1$ — PDCCH, Slot n, Slot n + 1

$\mu_{PDSCH} = 2$ — Slot $\left\lfloor n \cdot \frac{2^{\mu_{PDSCH}}}{2^{\mu_{PDCCH}}} \right\rfloor$, PDSCH, Slot $\left\lfloor n \cdot \frac{2^{\mu_{PDSCH}}}{2^{\mu_{PDCCH}}} \right\rfloor + K_0$

# FIG. 10

| | Slot 1 | Slot 2 | Slot 3 | Slot 4 | Slot 5 | Slot 6 | Slot 7 | Slot 8 |
|---|---|---|---|---|---|---|---|---|
| SLOT FORMAT 1001 | | | | | | | | |

| | | | | | | | | | | |
|---|---|---|---|---|---|---|---|---|---|---|
| Nominal repetition 1002 | N1 | N2 | N3 | N4 | N5 | N6 | N7 | N8 | N9 | N10 |

| | | | | | | | | | | | | | | | | | | |
|---|---|---|---|---|---|---|---|---|---|---|---|---|---|---|---|---|---|---|
| Actual repetition 1003 | X | X | A1 | A2 | A3 | A4 | A5 | A6 | X | X | X | X | X | A7 | A8 | A9 | A10 |

▨ : DOWNLINK(DL) SYMBOL — 1004
▨ : FLEXIBLE(F) SYMBOL — 1005
▨ : UPLINK(UL) SYMBOL — 1006

EP 4 611 460 A1

## FIG. 11

frequency hopping RB offset 1108

UL BWP 1106

RB start 1107

D 1101 — D 1102 — D — S — U

DL symbol 1101

Flexible symbol 1102

UL symbol 1103

Possible PUSCH transmission 1104

Scheduled PUSCH 1105

# FIG. 12

TDD periodicity

D D D S U D D D S U D D D S U D D D S U

1201     (a) TDD only configuration

TDD periodicity

D D D S U D D D S U D D D S U D D D S U

UL subband 1210

1212   1211    (b) SBFD configuration 1

TDD periodicity

D D D S U D D D S U D D D S U D D D S U

UL subband 1220

1222   1221    (c) SBFD configuration 2

TDD periodicity

D D D S U D D D S U D D D S U D D D S U

1232 1233 1234 1231    (d) SBFD configuration 3

# FIG. 13

UL BWP
1320

◨ UL subband    ▨ DL subband    ▥ UL region

| 1305        1310        1315

# FIG. 14

SBFD symbol/slot 1430    UL symbol/slot 1415

UL subband

UL BWP 1425

Legend:
- UL subband 1405
- DL subband 1410
- UL symbol/slot 1415
- Possible PUSCH transmission 1420

EP 4 611 460 A1

# FIG. 15

# FIG. 16

(a)

(b)

| UL subband | DL subband | UL symbol/slot | Possible PUSCH transmission |
|:---:|:---:|:---:|:---:|
| 1605 | 1610 | 1615 | 1620 |

EP 4 611 460 A1

**FIG. 17**

EP 4 611 460 A1

# FIG. 18

(a)

(b)

SBFD symbol/slot

UL symbol/slot

$N_{UL\ SB}^{size}$

$RB_{start}^{UL\ SB}$ — 1807

1808

$RB_{start,1}^{UL}$ — 1835

$RB_{offset,UL,1}$ — 1813

$N_{UL\ SB}^{size}$

1808

$RB_{offset,UL,0}$ — 1812

$RB_{start,0}^{UL}$ — 1830

$N_{UL\ SB}^{size}$

1808

$RB_{start,1}^{UL}$ — 1815

$RB_{offset,UL,1}$ — 1813

$RB_{start,1}^{SBFD}$ — 1811

$RB_{start,0}^{SBFD}$ — 1810

$RB_{offset,UL,0}$ — 1812

$RB_{start,0}^{UL}$ — 1814

$RB_{offset}$ — 1809

HOD#1

HOD#0

1801 — UL subband

1802 — DL subband

1803 — UL symbol/slot

1804 — Possible PUSCH transmission on UL subband

1805 — Possible PUSCH transmission on UL symbol/slot

1806 — Scheduled PUSCH

# FIG. 19

SBFD symbol/slot | UL symbol/slot

$N_{BWP}^{size}$ — 1915

$N_{UL\,SB}^{size}$ — 1908

$RB_{start}^{UL\,SB}$ — 1907

Hop#0 | Hop#1

$RB_{start,0}^{UL}$ — 1913

$RB_{offset,UL}$ — 1912

$RB_{start,0}^{SBFD}$ — 1910

1901 — UL subband
1902 — DL subband
1903 — UL symbol/slot
1904 — Possible PUSCH transmission on UL subband
1905 — Possible PUSCH transmission on UL symbol/slot
1906 — Scheduled PUSCH

EP 4 611 460 A1

# FIG. 20

```
┌─────────────────────────────────────┐
│  RECEIVE SBFD RESOURCE CONFIGURATION AND │
│  PUSCH TRANSMISSION CONFIGURATION     │──── 2001
│  FROM HIGHER LAYER SIGNALING          │
└─────────────────────────────────────┘
                  │
                  ▼
┌─────────────────────────────────────┐
│  COMPUTE START RB INDEXES OF TWO HOPS OF UL │
│  SUBBAND CONFIGURATION BASED FREQUENCY │──── 2002
│  HOPPING IN CONFIGURATION INFORMATION │
└─────────────────────────────────────┘
                  │
                  ▼
┌─────────────────────────────────────┐
│      CONVERT THE RB INDEXES          │
│      TO RB INDEXES OF UL BWP         │──── 2003
└─────────────────────────────────────┘
                  │
                  ▼
┌─────────────────────────────────────┐
│   TRANSMIT PUSCH IN SBFD SYMBOL      │
│   AND/OR UL-DEDICATED SYMBOL         │──── 2004
└─────────────────────────────────────┘
```

# FIG. 21

RECEIVE SBFD RESOURCE CONFIGURATION AND PUSCH TRANSMISSION CONFIGURATION FROM HIGHER LAYER SIGNALING — 2101

COMPUTE START RB INDEXES OF TWO HOPS OF UL BWP CONFIGURATION BASED FREQUENCY HOPPING IN CONFIGURATION INFORMATION — 2102

CONVERT THE RB INDEXES TO RB INDEXES OF UL SUBBAND — 2103

TRANSMIT PUSCH IN SBFD SYMBOL AND/OR UL-DEDICATED SYMBOL — 2104

# FIG. 22

# FIG. 23

## INTERNATIONAL SEARCH REPORT

| International application No. |
|---|
| **PCT/KR2023/016277** |

**A.    CLASSIFICATION OF SUBJECT MATTER**

**H04W 72/12**(2009.01)i; **H04W 72/23**(2023.01)i; **H04W 72/04**(2009.01)i; **H04L 5/00**(2006.01)i

According to International Patent Classification (IPC) or to both national classification and IPC

**B.    FIELDS SEARCHED**

Minimum documentation searched (classification system followed by classification symbols)

H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUSCH, DL, UL, 슬롯(slot), 부대역(subband), 주파수(frequency), 인덱스 (index), 호핑(hopping)

**C.    DOCUMENTS CONSIDERED TO BE RELEVANT**

| Category* | Citation of document, with indication, where appropriate, of the relevant passages | Relevant to claim No. |
|---|---|---|
| X | MODERATOR (CATT). Summary #4 of subband non-overlapping full duplex. R1-2210317, 3GPP TSG RAN WG1 #110bis-e. 20 October 2022.<br>See pages 2, 8, 56, 149 and 164-167 and figures 2-2 and 2-10. | 1-15 |
| A | CATT. Discussion on subband non-overlapping full duplex. R1-2208974, 3GPP TSG RAN WG1 #110bis-e. 30 September 2022.<br>See pages 1-14. | 1-15 |
| A | MEDIATEK INC. Discussion on subband non-overlapping full duplex for NR. R1-2209770, 3GPP TSG RAN WG1 Meeting #110bis-e. 30 September 2022.<br>See pages 1-17. | 1-15 |
| A | NTT DOCOMO, INC. Discussion on subband non-overlapping full duplex. R1-2209902, 3GPP TSG RAN WG1 #110bis-e. 30 September 2022.<br>See pages 1-17. | 1-15 |
| A | SAMSUNG. SBFD feasibility and design considerations for NR duplex evolution. R1-2206421, 3GPP TSG-RAN WG1 Meeting #110. 12 August 2022.<br>See pages 1-23. | 1-15 |

☐ Further documents are listed in the continuation of Box C.    ☐ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 January 2024** | **26 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)